# EUROPÄISCHE PATENTSCHRIFT

(11) **EP 2 233 993 B1**
(45) Veröffentlichungstag und Bekanntmachung des Hinweises auf die Patenterteilung: **10.10.2012**
(21) Anmeldenummer: 10157280.8
(22) Anmeldetag: 23.03.2010
(51) Int. Cl.: G05B 19/042

(54) **Steuerungs-Baukasten**
Control construction box
Système modulaire de commande

(30) Priorität: 19.01.2010 DE 102010005007; 25.03.2009 DE 102009014762; 17.04.2009 DE 102009017859; 25.03.2009 DE 102009014761; 17.04.2009 DE 102009017858
(43) Veröffentlichungstag der Anmeldung: 29.09.2010
(73) Patentinhaber: IVAT GmbH, 86165 Augsburg (DE)
(72) Erfinder: Frieters, Oliver, 86165 Augsburg (DE)
(74) Vertreter: Alber, Norbert

(56) Entgegenhaltungen:
- EP-A1- 0 743 578
- US-A1- 2006 097 063
- US-A1- 2006 229 746

## Beschreibung

### I. Anwendungsgebiet

Die Erfindung betrifft die Steuerung für mobile und stationäre Entstaubungsanlagen, z. B. Industriesauger.

### II. Technischer Hintergrund

Entstaubungsanlagen sind in der Industrie in großer Anzahl notwendig, um an Maschinen und Anlagen anfallende und durch Chemikalien oder Staub verunreinigte Luft am Entstehungsort abzusaugen, damit eine Gesundheitsgefährdung der dort arbeitenden Mitarbeiter vermieden wird. Solcherart verunreinigte Luft wird über Zufuhr-Kanäle, die an jeder Maschine oder Arbeitsstation beginnen, einem oder mehreren Absaug-Hauptkanälen zugeführt, durch die hindurch mittels eines Absaugventilators die Luft zu einem oder mehreren Filtern gesaugt wird, um danach gegebenenfalls wieder im gereinigten Zustand den Betriebsräumen zugeführt zu werden, was aus Gründen der Energieeffizienz notwendig ist, da sonst die Raumheizung in den abgesaugten Räumen extrem teuer wäre.

Dabei ist zwischen fest installierten und mobilen Absauganlagen zu unterscheiden. Bei mobilen Absauganlagen sind der Absaugventilator und häufig auch der Filter sowie der Auffangbehälter und zum Teil auch die Steuerung der Entstaubungsanlage in einem fahrbaren Gehäuse untergebracht, um bei Bedarf in die Nähe der abzusaugenden Maschine geschoben zu werden.

Da die Leistung - vor allem bei fest installierten Anlagen - des bzw. der Absaugventilatoren gesteuert werden muss in Abhängigkeit der Summe aller derzeit offenen Querschnitte von Zufuhrkanälen von den einzelnen abzusaugenden Maschinen - deren Sperrschieber nur geöffnet sind, wenn die entsprechenden Maschinen eingeschaltet sind und ansonsten zur Vermeidung von Undichtigkeiten des Kanalsystems geschlossen sind - muss eine Signalverbindung zwischen dem Antrieb jeder der angeschlossenen Maschinen oder einem die Stellung des jeweiligen Sperrschiebers anzeigenden Sensor und der Anlagen-Steuerung der Entstaubungsanlage bestehen, damit diese die Leistung der Absauganlage nachregeln kann.

Bei fest installierten Absauganlagen werden hierfür Signalgeber für jede einzelne angeschlossene Maschine meist fest in den entsprechenden elektrischen Schaltschränken montiert und verklemmt, in denen die - in der Regel fest an das Stromnetz angeklemmten - Maschinen elektrisch angeschlossen sind.

Von dort führen Signalleitungen, die wie die Elektroleitungen entlang der vorhanden Kabelkanäle gezogen werden müssen, zu der Anlagensteuerung der Entstaubungsanlage, was einen hohen Aufwand für diese Elektromontagetätigkeiten bedeutet angesichts der Vielzahl der angeschlossenen Maschinen und der nicht selten großen Entfernungen zwischen den einzelnen Maschinen und der Anlagen-Steuerung der Entstaubungsanlage.

Dabei ist von den Steuerungsfunktionen zu unterscheiden zwischen
- der Filtersteuerung, das steuert, wann, wie oft, über welche Dauer etc. die Abreinigungs-Vorrichtungen an den Filtern aktiviert werden, um die Filter zu säubern und
- einer Ventilatorsteuerung, die steuert, wann der eine oder die mehreren Ventilatoren eingeschaltet werden müssen und gegebenenfalls auf welcher Leistungsstufe, in Abhängigkeit von der Anzahl der momentan an der Entstaubungsanlage hängenden, laufenden Maschinen und den damit verbundenen offenen Querschnitten der Zufuhrkanäle und insbesondere der Summe der offenen Querschnitte der Zufuhrkanäle der eingeschalteten Maschinen.

Dabei besteht das Problem, dass die Ventilatoren und die Filter häufig von unterschiedlichen Anbietern stammen, jedenfalls über keine integrierte gemeinsame Steuerung verfügen.

Je nach Größe und Komplexität der Anlage kann es sein, dass eine Ventilatorsteuerung bereits vorhanden ist, und ein Filtersteuerungs-Modul zusätzlich benötigt wird oder umgekehrt oder keines von beiden vorhanden ist, jedoch nur eine Ventilatorsteuerung oder nur ein Filtersteuerungs-Modul gewünscht wird, wobei ein Filtersteuerungs-Modul in der Regel fast immer notwendig ist.

Auf dieser Art und Weise sind sehr viele unterschiedliche Konstellationen einer Entstaubungs-Anlagensteuerung möglich.

In diesem Zusammenhang ist aus dem EP 0743578 A1 eine Reinraumanlage mit Filter-Ventilatoreinheiten bekannt, bei der eine Vielzahl von Filter-Ventilatoreinheiten - meist von der Gebäudedecke aus - gereinigte Luft in den Raum bläst, die über Rückführöffnungen im Boden wieder abgesaugt und erneut umgewälzt wird. Dabei ist pro Filter-Ventilatoreinheit eine Steuerung vorhanden, die den Ventilator steuert, denn hinsichtlich des Filters ist offensichtlich keinerlei Steuerung notwendig, da eine Filterreinigung, die eine Steuerung erfordern würde, nicht vorhanden ist.

Die einzelnen Filter-Ventilatoreinheiten sind über ein drahtgebundenes Netzwerk miteinander verbunden, an welches auch ein PC als übergeordnete Steuerung angeschlossen werden kann.

Weiterhin ist aus der US-Patentanmeldung US 2006/0097063 A1 eine Klimaanlage bekannt, bei der die Luft auch gefiltert wird.

Die zentrale Filter-Ventilatoreinheit wird über eine Steuerung gesteuert, die über bidirektionale Funkverbindung mit anderen Steuerungsmodulen, wie etwa funkgesteuerten Raumthermostaten, funkgesteuerten raumspezifischen Verschlussklappen in den zu Luftkanälen und funkgesteuerten Temperatursensoren im Luftkanal in Verbindung steht.

Auch hier ist von einer Filterreinigung und einer dadurch erforderlichen Filtersteuerung nicht die Rede.

### III. Darstellung der Erfindung

### a) Technische Aufgabe

Es ist daher die Aufgabe gemäß der Erfindung, einen modularen Baukasten aus möglichst wenigen verschiedenen Einzelteilen zur Verfügung zu stellen, aus denen die benötigte Entstaubungs-Anlagensteuerung möglichst flexibel, einfach und schnell erstellt und auch montiert werden kann.

### b) Lösung der Aufgabe

Diese Aufgabe wird durch die Merkmale der Ansprüche 1, 12 und 14 gelöst. Vorteilhafte Ausführungsformen ergeben sich aus den Unteransprüchen

Die Erfindung geht zunächst von der Idee aus, dass die Entstaubungs-Anlagensteuerung nach Art eines modularen Baukastens aus einzelnen, signaltechnisch miteinander verbundenen, Steuerungs-Modulen nach Bedarf zusammengestellt werden kann, von denen innerhalb der Anlagensteuerung dann eines als Master-Modul fungiert und die höchste Hierarchiestufe gegenüber den anderen Steuerungs-Modulen, den Slave-Modulen, einnimmt.

Eine solche Anlagensteuerung umfasst mindestens entweder ein Filtersteuerungs-Modul und/oder ein Ventilatorsteuerungs-Modul, von denen eben eines als Master-Modul fungiert.

Die Erfindung geht weiterhin davon aus, dass im Vergleich zwischen Ventilatorsteuerungs-Modul und Filtersteuerungs-Modul letzteres mit weitaus höherer Häufigkeit als Master für die anderen Steuerungs-Module dient, also diesen gegenüber eine höhere Entscheidungs-Priorität besitzt und daher das unbedingt benötigte Bauteil ist, während das Ventilatorsteuerungsmodul höchstens dann als Master verwendet wird, wenn gar kein Filtersteuerungs-modul vorhanden ist und auch nicht benötigt wird, also bei kleinen, einfachen Anlagen.

Erfindungsgemäß wird die drahtlose Signal-Übertragungseinheit, etwa die Funkeinheit, in das Master-Modul, z. B. das Filtersteuerungs-Modul integriert, und bietet von dort aus eine drahtlose Verbindung mit anderen Teilen des Bausatzes, beispielsweise den anderen Steuerungs-Modulen oder den für die Steuerung benötigten Signalgebern, die vorzugsweise ebenfalls eine Funkeinheit enthalten, z. B. die Schiebersteuerungsmodule.

Auch mehrere Anlagensteuerungen, die jeweils ein Master-Modul umfassen, können gekoppelt werden, indem deren Master-Module signaltechnisch miteinander verbunden werden.

Ferner kann die Entstaubungsanlagen-Steuerung -je nach Ausbaustufe der Entstaubungsanlage - weitere Steuerungsmodule umfassen:
Ein Schiebersteuerungs-Modul steuert einen einzelnen oder eine Gruppe von Sperrschiebern oder Brandschutzklappen an und öffnet und schließt diese, abhängig von einem Signal, welches von der Anlagensteuerung der Entstaubungsanlage kommen kann, aber meist direkt von der Maschine, welcher der entsprechende Sperrschieber in der Zufuhrleitung für abzusaugende Luft zugeordnet ist, und meldet die Stellung des Schiebers an ein Steuerungsmodul, in der Regel das Master-Modul.

Ein Reststaubsteuerungs-Modul öffnet oder verschließt automatisch die Rückführung der gefilterten Luft in die Betriebsräume in Abhängigkeit von des stromabwärts des Filters gemessenen Reststaubgehaltes in der abgesaugten Luft.

Hierfür ist ein Reststaubsensor stromabwärts der Filter als Signalgeber erforderlich.

Ein Funkenlöschsteuerungs-Modul, das automatisch eine Funkenlöschvorrichtung aktiviert - die in den Zufuhrkanälen und/oder im Filter bzw. dessen Auffangbehälter vorhanden sein kann - abhängig davon, ob bzw. mit welcher Häufigkeit Funken in den Zufuhrkanälen der abgesaugten Luft detektiert werden.

Dies wird mit Hilfe eines automatisch arbeitenden Funkensensors ermittelt, der als Signalgeber für das Funkenlöschsteuerungs-Modul arbeitet.

Dabei werden alle notwendigen elektrischen Verbindungen ohne elektrische Klemmarbeiten, also entweder drahtlos, z. B. per Funk, oder mittels steckbaren Kabeln realisiert, so dass für die Montagearbeiten kein Elektriker benötigt wird, also sowohl zwischen den einzelnen Steuerungsmodulen als auch zu den Signalgebern hin.

Die Steuerungsmodule werden dabei meist als Signalempfänger verwendet, manchmal jedoch auch als Signalgeber oder als beides gleichzeitig.

Da im Falle einer Funkanbindung vor allem der Signalgeber und das Mastermodul, aber auch die untergeordneten Steuerungsmodule, über eine Funkeinheit verfügen sollte, ist eine solche Funkeinheit dementsprechend wenigstens beim Master-Modul, insbesondere bei allen Steuerungsmodulen, vorhanden.

Alle Steuerungsmodule, die eine Funkeinheit enthalten, können entweder für den vorgesehenen Steuerungszweck eingesetzt werden, oder aber auch ausschließlich als Funkeinheit eingesetzt werden, beispielsweise angeschlossen an ein Steuerungsmodul, welches selbst keine eigene Funkeinheit enthält, und dann lediglich zur Signalübertragung per Funk verwendet werden, ohne dessen integrierte Steuerungsfunktionalität zu nutzen.

Dementsprechend enthält die Ventilatorsteuerung nicht unbedingt eine Funkeinheit und wird entweder per Kabel mit dem Filtersteuerungs-Modul verbunden, oder es wird an die Ventilatorsteuerung per (kurzen) Kabeln ein weiteres Filtersteuerungs-Modul, das ein kombiniertes Filtersteuerungs/Funkmodul ist, angeschlossen, das dann lediglich als Funkeinheit genutzt wird, um eine drahtlose Funkverbindung mit einem zweiten, entfernten Filtersteuerungs-Modul, das als Master-Modul dient, herzustellen.

Die einzelnen Steuerungsmodule können in körperlicher Hinsicht auf der Platine entweder nur die jeweilige benötigte Steuerungsfunktionalität aufweisen, oder eine mit allen Steuerungsfunktionalitäten bestückte Universalplatine enthalten, von denen dann - je nach benötigtem Einsatzzweck und Einsatzort - jeweils nur eine oder einige wenige Steuerungsfunktionalitäten (Filtersteuerung, Ventilatorsteuerung, Schiebersteuerung, Reststaubsteuerung, Funkenlöschsteuerung) benutzt werden.

Zu diesem Zweck weisen die Gehäuse der Ventilatorsteuerung als auch des Filtersteuerungs-Moduls entweder Steckerbuchsen für eine Signalübertragung, insbesondere eine kombinierte Signal-/Stromübertragung auf oder eine Funkeinheit, selten beides.

Die Steckerbuchsen als auch die Stecker der dazu passenden Kabel sind vorzugsweise in ihrer Form und/oder Pin-Anordnung speziell gestaltet, so dass keine Standardstecker hineinpassen, um Verwechslungen mit den Anschlüssen anderer Geräte und Verbindungen mit nicht zur Entstaubungsanlage und deren Steuerung gehörenden anderen Teilen zu vermeiden.

Die Anschlussbuchsen können zusätzlich Aussparungen aufweisen, deren zugeordnete Nasen an den Anschlusssteckern abgebrochen werden können und die Aussparungen in den Anschlussbuchsen durch Passstücke verschlossen werden können. Je nach Anzahl der vorhandenen Aussparungen insgesamt sowie der Anzahl und Anordnung der offenen und geschlossenen Aussparungen können damit Anschlussbuchsen für spezifische Zwecke geschaffen werden, in die analog nur spezifisch präparierte Kabel eingesteckt werden können, so dass Verwechslungen und Falschanschlüsse vermieden werden.

Vorzugsweise ist jedes Steuerungsmodul in einem eigenen Gehäuse untergebracht, wobei es sich insbesondere um jeweils identische Gehäuse handelt.

Die Gehäuse besitzen vorzugsweise einen abnehmbaren Deckel, insbesondere auch einen abnehmbaren Boden, wodurch nach Abnehmen von Deckel und Boden das verbleibende Restgehäuse stirnseitig jeweils offen ist.

Diese stirnseitig offenen Gehäuse und damit auch die entsprechenden Steuerungsmodule können dann insbesondere auch direkt gegeneinander befestigt, insbesondere verschraubt, werden, so dass trotz Unterbringung in eigenen Gehäusen die einzelnen Steuerungsmodule körperlich kombiniert werden können und im Inneren natürlich elektrisch miteinander verbunden werden können.

Bereits mit diesem Grundbaukasten lassen sich sehr unterschiedliche Konstellationen der Anlagensteuerung realisieren:

### A: Nur Ventilatorsteuerungs-Modul:

In einem sehr einfachen Fall kann lediglich eine Steuerung zum Steuern des automatischen Ein- und Ausschaltens des vorhandenen Absaug-Ventilators benötigt werden, während keine Steuerung zum automatischen periodischen Reinigen des Filters vorhanden ist. Die Filterabreinigung muss manuell ein-und ausgeschaltet werden oder es handelt sich um einen so einfachen Filter, der überhaupt keine Abreinigungsvorrichtung mit Rüttel-Motor oder druckluftbetriebenen Reinigungsdüsen aufweist, sondern lediglich von Hand gereinigt werden kann.

Dessen Steckerbuchsen umfassen mindestens eine Buchse für ein Ausgangssignal zu dem Ventilator oder den mehreren Ventilatoren aufweisen, um diese ein- und auszuschalten, und ebenso mindestens eine Anschlussbuchse für ein Eingangssignal, z. B. von einem Sensor, über welches der Ventilatorsteuerung mitgeteilt wird, ob und ggf. welche angeschlossenen Maschinen in Betrieb sind und/oder die zugehörigen Sperrschieber dementsprechend offen sind.

Dieses Eingangssignal erhält die Ventilatorsteuerung normalerweise durchgeschleift von dem Filtersteuerungs-Modul, das in diesem Fall jedoch nicht vorhanden ist. Deshalb muss von der Eingangs-Buchse zur AusgangsBuchse eine Kurzschlussverbindung mittels eines speziellen, z. B. Y-förmigen, Rückkopplungskabels hergestellt werden, das mit seinen beiden parallelen Enden in diese beiden Buchsen eingesteckt wird.

Umgekehrt kann ein solches Y-förmiges Kabel, eingesteckt mit dem gegenüberliegenden einzigen Stecker in eine Ausgangsbuchse zum Steuern zweier paralleler, an die beiden parallelen Stecker des Y-Kabels angekoppelten Schieber, Ventile oder andere Geräte dienen.

### B: Nur Filtersteuerungs-Modul:

Das Filtersteuerungs-Modul steuert automatisch die FilterReinigungsvorrichtung, damit sich die Filter nicht zu stark zusetzen, was den Luftdurchlass und damit Leistungsbedarf der Ventilatoren erhöht und diese auch heißlaufen lassen kann.

Hierzu verfügt sie über Steckerbuchsen und/oder eine Funkeinheit, an die beispielsweise Drucksensoren angeschlossen werden können, die einerseits vor und andererseits hinter den Filtern im Zufuhrkanal z. B. Hauptkanal, angeordnet sind. Die Filtersteuerung ermittelt hieraus eine Druckdifferenz und setzt bei zu hoher Druckdifferenz ab einem vorgegebenen Schwellenwert die Filterreinigungsvorrichtung in Gang.

Ebenso kann die Filtersteuerung eine Signalanbindung, z. B. eine Steckerbuchse zum Anschluss eines Füllstandsensors im Staubauffangbehälter des Filters umfassen, so dass die Filtersteuerung bei Überschreiten eines vorgegebenen Füllstandes entweder ein Alarmsignal abgibt oder automatisch eine Austragsvorrichtung zum Austragen des angesammelten Staubes aus dem Staubsammelbehälter in Gang setzt.

Das auch in diesem Fall einzige und daher als Master-Modul dienende Filtersteuerungs-Modul verfügt über mehrere Steckerbuchsen für Eingangssignale, die von den einzelnen Maschinen bzw. deren Sperrschiebern kommen:
Entweder wird unmittelbar das Fließen eines Stromes zu der jeweiligen angeschlossenen Maschine durch Signalgeber detektiert, beispielsweise in die Stromzufuhr kontaktlos eingebaute Wandlerspulen, die sich innerhalb der Maschine befinden können, oder durch Strom-Zwischenstecker als Signalgeber, die in die Stromzuführung der Maschine zwischengesteckt werden und einen Stromflusssensor, etwa die erwähnte Wandlerspule, enthalten. Dann gibt der entsprechende z.B. Stromzwischenstecker, über Kabel oder Funk, ein Signal an das Filtersteuerungs-Modul, wenn die betreffende Maschine mit Strom versorgt wird, also in Betrieb ist.

Denn immer dann, wenn die Maschine läuft, wird automatisch, beispielsweise von der Maschinensteuerung aus oder gesteuert über deren Stromversorgung oder auch von der Entstaubungsanlagensteuerung selbst, auch der entsprechende Sperrschieber geöffnet, der bei ausgeschalteter Maschine sich wieder schließt, um den Aufbau des zum Absaugen notwendigen Unterdruckes in den Zufuhrkanälen nicht unnötig zu erschweren.

Noch besser ist es, stattdessen - vor allem bei von Hand zu betätigenden Schiebern - nicht die Stromversorgung der entsprechenden Maschine, sondern stattdessen und/oder ergänzend den entsprechenden, der Maschine zugeordneten, Sperrschieber hinsichtlich seiner Stellung (offen oder zu) zu detektieren, der sich im Zufuhrkanal für die abzusaugende Luft von der entsprechenden Maschine zum Filter in der Regel unmittelbar hinter dieser Maschine befindet.

Allerdings gibt es Situationen, in denen der Sperrschieber geöffnet ist, ohne dass die Maschine läuft, beispielsweise wenn die Maschine gereinigt wird, um den dann anfallenden Staub der Reinigungsarbeit ebenfalls aus der Maschine abzusaugen, weshalb insbesondere die Signalgeber an den Maschinen oder Sperrschiebern einen Schalter zum manuellen Bewirken des Öffnens dieses Sperrschiebers aufweisen.

Hierfür kann auch ein Stromzwischenstecker verwendet werden, falls die sogenannte Kehrlochklappe ebenfalls mittels Motor betätigt wird und zu diesem Zweck kurzzeitig Strom fließt, so dass in die Stromzuführung ein Stromzwischenstecker zwischengesetzt werden kann, der diesen Stromfluss an eines der Steuerungsmodule, in der Regel das Master-Modul, weitergibt.

Für die Positionierung des Filtersteuerungs-Moduls und deren signalmäßige Anbindung an die Signalgeber - wie etwa den Stromzwischenstecker der Maschine - oder einen speziellen Sensor am Sperrschieber stehen mehrere Möglichkeiten zur Verfügung:
Die beschriebene Anbindung über Kabel ist dann sinnvoll, wenn die Entfernung zwischen dem hier als Master-Modul arbeitenden Filtersteuerungs-Modul und dem anzuschließenden z.B. Signalgeber nicht allzu groß ist.

Werden mittels der Absauganlage beispielsweise nur wenige Maschinen abgesaugt, die noch dazu räumlich nicht allzu weit auseinander stehen, so kann das Filtersteuerungs-Modul im Bereich dieser Maschinen positioniert und mit den betreffenden Signalgebern, die sich an oder nahe an diesen Maschinen befinden, über Kabel signaltechnisch verbunden werden. Da es sich bei diesem Kabel vorzugsweise um ein Kombinationskabel handelt, das neben der Signalübertragung auch eine Stromübertragung durchführen kann, wird das Filtersteuerungs-Modul über das eine oder die mehreren angeschlossenen Kabel auch mit Strom versorgt, und benötigt selbst somit keinen eigenen Stromanschluss, was die Freiheit bei der Positionierung des Filtersteuerungs-Moduls stark vergrößert.

Damit befindet sich das Filtersteuerungs-Modul jedoch dennoch weit entfernt von dem Filter, den sie steuern soll.

Da das Filtersteuerungs-Modul jedoch auch eine Funkeinheit enthält, ist die Verbindung zum Filter auch über Funk möglich.

Für die vorliegende Erfindung ist alternativ oder ergänzend zu einer Funkeinheit zumindest in dem Master-Modul, z. B. des Filtersteuerungs-Moduls - besser in allen Steuerungsmodulen - auch eine Modulationseinheit vorhanden, welches in der Lage ist, eine Signalübertragung über die vorhandene Elektroinstallation durch Aufmodulieren eines Signals auf die Stromleitung zu übertragen. Dies jedoch erfordert einen Anschluss des Filtersteuerungs-Moduls und ebenso des damit signaltechnisch zu koppelnden Bauteiles an das Stromnetz und damit eine jeweils in der Nähe befindliche Steckdose.

Diese Alternative ist im Folgenden jeweils nicht mehr separat erwähnt, sondern es ist immer nur von einer Funkverbindung die Rede, was die Alternative der Modulationseinheit mit abdecken soll.

Das an den Filter zu sendende Signal kann der Filter empfangen, indem er z. B. eine eigene Funkeinheit enthält. Ist dies nicht der Fall, wird an den Filter über ein nur kurzes Kabel wiederum eine weiteres Filtersteuerungs-Modul angeschlossen, das lediglich als Funkempfänger benutzt wird, da die eigentliche Verarbeitung der Eingangssignale bei dem ersten Filtersteuerungs-Modul in der Nähe der Maschinen bereits erfolgt ist.

Das zweite, lediglich als Funkeinheit benutzte Filtersteuerungs-Modul nahe am Filter erkennt anhand des von dem ersten Filtersteuerungs-Modul erhaltenen Signals und insbesondere an dessen Struktur, dass es sich bereits um ein Ausgangssignal eines Filtersteuerungs-Moduls handelt, das von dem zweiten Filtersteuerungs-Modul nicht mehr bearbeitet werden muss.

Eine separate Ventilatorsteuerung ist in diesem Fall nicht vorhanden, da der Absaugventilator beispielsweise über eine zentrale bauseitige, bereits vorhandene, Steuerung geschaltet wird oder permanent läuft, also zu Arbeitsbeginn eingeschaltet und zu Arbeitsende abgeschaltet wird.

### C: Zusätzliches Schiebersteuerungs-Modul:

Für den Fall, dass die Stellung eines Sperrschiebers nicht nur detektiert, sondern von der Entstaubungsanlagen-Steuerung der Sperrschieber auch aktiv betätigt (geöffnet oder geschlossen) werden soll, ist hierfür ein Schiebersteuerungs-Modul notwendig, das vorzugsweise direkt am entsprechenden Sperrschieber und dessen Schieberantrieb, in der Regel einem Elektromotor, angeordnet ist.

Dies erfolgt aufgrund eines erhaltenen Signals über den Einschaltzustand der entsprechenden Maschine, und die bewirkte Schieberbewegung wird an das Master-Modul weitergemeldet.

Das Schiebersteuerungs-Modul wird mit dem Master-Modul - in der Regel dem Filtersteuerungs-Modul - wiederum mittels der beschriebenen Kabel signaltechnisch verbunden oder mittels Funk, wobei dann natürlich auch das Schiebersteuerungs-Modul eine Funkeinheit enthalten muss.

Bei Anbindung mittels Kabeln wird durch Verwendung der beschriebenen Kombinationskabel nur an einem der beiden beteiligten Module ein Stromanschluss benötigt, während das jeweils andere Steuerungsmodul über das Kombinationskabel mit Strom versorgt wird und keinen eigenen Stromanschluss an das Stromnetz benötigt.

Die einzelnen Schiebersteuerungen können - falls nicht das Filtersteuerungs-Modul, sondern das Ventilatorsteuerungs-Modul als Master-Modul fungiert - auch direkt an das Ventilatorsteuerungsmodul angebunden werden.

### D: Filtersteuerungs-Modul mit zusätzlichem Ventilatorsteuerungs-Modul:

Wenn der vorhandene Absaugventilator oder die mehreren Absaugventilatoren über eine Ventilatorsteuerung spezifisch gesteuert werden soll, erhält die Ventilatorsteuerung das diesbezügliche Signal über die laufenden Maschinen, also die aufsummierten offenen Kanalquerschnitte, von dem Filtersteuerungs-Modul, in aller Regel über wiederum eines der gleichzeitig Signal und Strom übertragenden gesteckten Kombinationskabel.

Diese Kombinationskabel - und natürlich auch das Rückkopplungskabel, welches an die gleichen Buchsen passen muss - weisen eine spezifisch gestaltete Querschnittsform und/oder Pinanordnung auf, so dass keine andere Kabelart versehentlich dort eingesteckt werden kann.

Sofern das Ventilatorsteuerungs-Modul zu weit von dem Filtersteuerungs-Modul entfernt ist und eine Kabelverlegung dazwischen zu aufwendig wäre, kann dies wiederum auch z.B. mittels Funk realisiert werden.

Da die Ventilatorsteuerung jedoch meist keine eigene Funkeinheit enthält, wird zu diesem Zweck an der Ventilatorsteuerung wiederum über ein meist nur sehr kurzes Kombinationskabel am Ort der Ventilatorsteuerung ein zusätzliches Filtersteuerungs-Modul angesteckt, das auch in diesem Fall wiederum nur als Funkempfänger für das von dem anderen eigentlichen Filtersteuerungs-Modul kommende Signal dient, welches die Ventilatorsteuerung zum Steuern des Ein- und Ausschaltens des Ventilators benötigt.

Denn gerade bei größeren Fertigungshallen ist es häufig so, dass sich im Gegensatz zu den produzierenden Maschinen die Filter der Entstaubungsanlage unmittelbar oberhalb der großen und deshalb häufig außerhalb der Produktionshalle im Freien angeordneten Staubsilos befinden, während sich der oder die Absaugventilatoren wahlweise innerhalb oder außerhalb des Gebäudes befinden können, abhängig von Lärmbelastbarkeit, Ausnutzung der Abwärme der Ventilatoren etc., jedoch immer vor der Verzweigung zwischen Rückluftleitung und Fortluftleitung.

Dadurch sind fast immer große Entfernungen zwischen den Filtern einerseits und den produzierenden Maschinen andererseits bei größeren Produktionsstätten gegeben.

Somit ist klar, dass die Absauganlagensteuerung hinsichtlich der enthaltenen Komponenten frei zusammengestellt werden kann und die Signalübertragung z.B. zu und von dem Filtersteuerungs-Modul wahlweise per gesteckten Kabeln, Funk oder Stromleitungs-Aufmodulation erfolgen kann, wobei abhängig vom gewählten Weg dann gegebenenfalls das Filtersteuerungs-Modul mangels Stromversorgung über das Kombinationskabel einen eigenen Stromanschluss benötigt.

### E: Mit Reststaubsteuerungs-Modul:

Wenn der Baukasten ein separates Reststaub-Steuerungs-Modul umfasst, ist dieses in einem eigenen Gehäuse untergebracht und weist wenigstens zwei Steckerbuchsen auf, nämlich eine für die Ansteuerung der Umschaltung zwischen Fortluft und Innenluft, und enthält vorzugsweise auch eine Funkeinheit, insbesondere die gleiche Funkeinheit wie das Filtersteuerungs-Modul und eine als Signaleingang von einem Reststaubsensor.

Denn die Reststaubsteuerung agiert auf Basis der Signale des Reststaub-Sensors, der stromabwärts des Filters im Rückluftkanal angeordnet sein muss i.d.R in einem eigenen Gehäuse angeordnet ist und ebenfalls meistens eine Funkeinheit enthält, und schaltet um zwischen Rückluft und Fortluft, durch Ansteuerung einer Klappe, die ebenfalls stromabwärts des Filters, aber unter Umständen weit dahinter, in dem Rückluftkanal vorhanden sein muss, je nachdem, ob der vom Reststaubsensor gemessene Staubgehalt in Abhängigkeit des Volumenstromes über oder unter einem im Reststaubsteuerungsmodul und/oder im Master-Modul hinterlegten Grenzwert liegt.

Der gemessene Reststaubgehalt wird meistens auch an das Master-Modul übertragen und an einem für den Benutzer einsehbaren Display am Master-Modul oder separat angeordnet angezeigt.

Dementsprechend wird das Reststaubsteuerungs-Modul entweder an der einen oder der anderen der beiden Stellen angeordnet und ist dann von dem jeweils anderen Bauteil unter Umständen weit entfernt, weshalb zur Überwindung dieser Entfernung die Funkeinheit sinnvoll ist. An dem anderen Bauteil kann dann wieder über ein kurzes Kabel vor Ort ein z.B. Filtersteuerungs-Modul angeschlossen werden, das dann wiederum nur als Funkeinheit benutzt wird.

### F. Mit Funkenlöschsteuerungs-Modul:

Wenn der Baukasten ein eigenes Funkenlöschsteuerungs-Modul umfasst, ist auch dieses Modul entweder im Gehäuse des Mastermoduls oder in einem eigenen Gehäuse untergebracht, welches wiederum mindestens zwei Steckerbuchsen oder/und eine Funkeinheit aufweist:

Mindestens eine Steckerbuchse wird benötigt, um wenigstens einen Funkensensor als Signalgeber anzuschließen.

Wenn dieser auftretende Funken meldet, setzt die Funkenlöschsteuerung die Funkenlöschvorrichtung in Gang, die durch Ausbringen eines Löschmittels - je nach Anordnung in einem der Kanäle oder im Filter oder in dem Staubsammelsilo - ein Löschmittel ausbringt, und die Funken ablöscht.

Gegebenenfalls kann zur Absicherung z. B. stromabwärts der Funkenlöschvorrichtung ein weiterer Funkendetektor als Signalgeber vorhanden sein, der ebenfalls mit der Funkenlöschsteuerung verbunden ist, und überprüft, ob hinter der Funkenlöschvorrichtung tatsächlich keine Funken mehr auftreten.

Da der Funkendetektor und die Funkenlöschvorrichtung in der Regel nicht allzu weit voneinander entfernt sind, kann meistens die Funkenlöschsteuerung mit dem Funkendetektor als Signalgeber über ein Kabel verbunden werden, so dass diese beiden Komponenten in der Regel keine Funkeinheit enthalten.

Falls jedoch eine oder mehrere Funkenlöschsteuerungs-Module mit Funkendetektoren an ganz unterschiedlichen Stellen der Absauganlage als Signalgeber verbunden sein müssen, ist auch in diesem Fall eine Funkverbindung und damit in den entsprechenden Modulen eine Funkeinheit notwendig.

Hierüber wird dann an das Master-Modul das entsprechende Signal gesandt, dass zu viele Funken auftreten - entweder trotz Löschung oder weil gar keine Funkenlöschvorrichtung, sondern nur eine Funkendetektion, vorhanden ist - so dass als Folge hiervon das Master-Modul die Absaugung abschaltet.

### G: Mit eigener Stromerzeugung/Umwandlung:

Selbst wenn das Filtersteuerungs-Modul über das Kombinationskabel Strom von dem angeschlossenen z.B. Stromstecker oder einem anderen Sensor erhält, benötigt sie für den eigenen Betrieb, z. B. im Ausland bei anderer Netzspannung, eine andere Spannung als die angelieferte Spannung.

Zu diesem Zweck enthält das Filtersteuerungs-Modul - und zwar vorzugsweise im Deckel des Gehäuses - einen Trafo zum entsprechenden Umwandeln auf die benötigte Spannung.

Da das Filtersteuerungs-Modul und/oder das Ventilatorsteuerungs-Modul auch über überhaupt keinen Stromnetzanschluss verfügen kann - wenn sie weder über ein Kombinationskabel noch über eine angeschlossene Stromsteckdose mit Strom versorgt wird - kann es sinnvoll sein, in oder mit dem Steuerungs-Modul - und dann wiederum vorzugsweise auch im Deckel des Gehäuses - einen eigenen Stromerzeuger vorzusehen, der mittels eines in der Umgebung vorhandenen physikalischen Parameters wie Druck, Temperatur oder Luftströmung angetrieben wird, z. B. ein Lüfterrad im Kanal, das von der Luftströmung angetrieben wird oder ein Lüfterrad, das von der Druckluft angetrieben wird, die z. B. ohnehin dort vorhanden ist wegen eines Steuerventiles, welches mittels Druckluft arbeitet, etwa die Reinigungsdüsen ansteuert.

Sofern Trafo und/oder Stromerzeuger nicht gemeinsam im Deckel Platz finden, sind unterschiedliche Deckel für das Gehäuse des Filtersteuerungs-Moduls im Bausatz enthalten, das wahlweise benutzt werden können.

Auch ein separater Deckel mit darin untergebrachten integrierten Rüttel-Ventilen, Pneumatikventilen oder Pilotventilen, die andere z. B. Ventile steuern, ist für spezielle Ausbauformen als Bestandteil des Bausatzes sinnvoll.

In einer bevorzugten Ausführungsform passt das Gehäuse der Ventilatorsteuerungs-Modul oder jedes anderen Moduls auch genau auf das Gehäuse des - dann ohne Deckel benutzten - Filtersteuerungs-Moduls oder eines anderen Moduls, vorzugsweise indem Filtersteuerungs-Modul und Ventilatorsteuerung über das gleiche Gehäuse und auch die gleichen Deckel verfügen. Dann können Ventilatorsteuerung und Filtersteuerungs-Modul aufeinander gesetzt und deren Gehäuse gegeneinander verschraubt werden.

Des Weiteren umfasst die Ventilatorsteuerung vorzugsweise auch einen Frequenzumrichter, um den einen oder die mehreren angeschlossenen Ventilatoren hochzufahren bzw. auf unterschiedlichen Leistungsstufen laufen zu lassen.

In diesem Fall enthält die Ventilatorsteuerung dann auch einen Differenzdruckmesser oder Unterdruckmesser, mit z. B. Steckerbuchsen für Signalgeber, die den Druck in der Absauganlage vor und hinter dem Filter oder den Unterdruck im Kanal messen, so dass die Ventilatorsteuerung in Abhängigkeit des daraus ermittelten Differenzdruckes den die Filter reinigt und Frequenzumrichter steuert.

Mit dem gleichen Signal kann auch ein separates Filtersteuerungs-Modul auch die Filterreinigung steuern.

Ebenso kann die Ventilatorsteuerung einen z. B. einstellbaren Zeitschalter enthalten, um beim Abschalten einer oder insbesondere der letzten angeschlossenen Maschine den Absaugventilator hierzu zeitversetzt abzuschalten bzw. auf die nächste Leistungsstufe herunterzuschalten, um den im Luftkanal vorhandenen Staub noch zuverlässig abzusaugen.

Des Weiteren wird die Ventilatorsteuerung vorzugsweise am Gehäuse, insbesondere in einem speziellen hierfür vorhandenen Deckel, einen Schalter zum manuellen In-Gang-Setzen des Absaugventilators, also unabhängig vom Einschaltzustand der Maschinen oder/und gegebenenfalls ein Drehrichtungskontrolle z. B. durch eine Leuchtanzeige, aufweisen.

Damit die Ventilatorsteuerung den mindestens einen Absaugventilator wirk- lich bedarfsgerecht steuern kann, enthält die das Master-Modul bzw. das-

Ventilatorsteuerungs-Modul vorzugsweise auch ein Zählwerk, welches mindestens die Anzahl der derzeit arbeitenden und abzusaugenden Maschinen hoch- und herunterzählt, insbesondere einschließlich der Querschnitte der von den einzelnen Maschinen herangeführten Zuluftkanäle, denn genau daraus errechnet sich letztendlich der Bedarf an Absaugleistung, also der benötigte Volumenstrom.

Die Querschnitte müssen natürlich eingangs in die Absauganlagensteuerung einmal manuell mittels einer geeigneten Eingabeeinheit oder Eingabemethode eingegeben werden, sofern die Steuerung nicht über eine diesbezügliche Inbetriebnahme-Automatik verfügt, die dies selbsttätig ermittelt, z. B. über minimal oder maximal einzuhaltenden Volumenstrom.

Eine geeignete Eingabemethode besteht darin, beim ersten Einschalten der Anlage und deren Steuerung mehrmals kurz hintereinander ein- und wieder auszuschalten, wobei die Zeitdauer des Ein- und Ausschaltens wie folgt von der Anlagensteuerung, also dem Master-Modul, interpretiert wird:
- Zeitdauer erstes Einschalten = %ualer Anteil des Querschnittes des ersten Zufuhrkanals am Gesamtquerschnitt aller Zufuhrkanäle,
- Zeitdauer erste Einschaltunterbrechung = gewünschte Nachlaufzeit der Absaugung nach Abschalten der Maschine am ersten Zufuhrkanal,
- Zeitdauer zweites Einschalten '= %ualer Anteil des Querschnittes des zweiten Zufuhrkanals am Gesamtquerschnitt aller Zufuhrkanäle,
usw.

### H: Mit Funkverstärker:

Sofern die Funkeinheit in einem anderen Modul oder einem der Signalgeber eingebaut oder ein separates Modul ist und einen Funkverstärker enthält, kann diese lediglich als Funkverstärker zur Verlängerung einer Funkübertragungsstrecke zu und von dem eigentlichen, als Steuerung arbeiteten Master-Modul benutzt werden.

Zusätzlich zum Funkverstärker ist in der Funkeinheit eine Software installiert, welche die empfangenen Daten weitersendet wie in einem Wireless-LAN Netzwerk zu allen im Empfangsbereich befindlichen weiteren Empfängern, die an Steuerungs-Modulen oder Signalgebern vorhanden sein können.

### I: Mehrere Arten von Steckerbuchsen:

Wenn die Steckerbuchsen an den Steuerungs-Modulen unterteilt sind in Geberanschlussbuchsen und Busanschlussbuchsen, stehen die Geberanschlussbuchsen zum Anschließen der unterschiedlichsten Signalgeber als auch weitere Module zur Verfügung, während die Busanschlussbuchsen zum Anschließen eines Datenbusses dienen und hierüber z. B. an einem Filtersteuerungs-Modul etwa ein PC angeschlossen werden kann zum Auswerten oder zum Programmieren oder Parametrieren des Filtersteuerungs-Moduls, oder darüber ebenso mehrere Filtersteuerungs-Module oder andere Steuerungsmodule miteinander gekoppelt werden können.

Sofern das Filtersteuerungs-Modul nicht nur einen, sondern zwei getrennte Funkeinheiten enthält, die insbesondere auf getrennten Frequenzen arbeiten - was jedoch selten der Fall sein wird - kann die eine Frequenz zur Übertragung der Signale nur von Sperrschiebern oder einer anderen spezifizierten Sensorart verwendet werden, während auf einer anderen Frequenz eine andere Sensorart oder alle anderen Sensorarten übertragen werden.

Sofern der Baukasten nicht nur eine Ventilatorsteuerung, sondern mehrere verschiedene Ventilatorsteuerungen für unterschiedliche Leistungsstufen der Ventilatoren enthält, kann der Baukasten für sehr unterschiedlich große Absauganlagen gleichermaßen verwendet werden.

### K: Verschiedene Arten von Signalgebern:

Der Bausatz umfasst natürlich auch die diversen Signalgeber, welche den Steuerungsmodulen die benötigten Eingangssignale liefern:

Zum einen sind dies die bereits erwähnten Signalgeber, die den Stromfluss zu einer der angeschlossenen Maschinen oder die Stellung eines Sperrschiebers in einem Kanal detektieren.

Mobile Absauganlagen, beispielsweise größere Industriesauger, werden häufig zu einer benötigten Maschine gefahren, und ein von der Maschine die Luft absaugender Zufuhrkanal, meist in Form eines Schlauches, in einen entsprechenden Anschluss des Industriesaugers gesteckt.

Zu diesem Zweck muss die Verschlussklappe dieses Anschlusses geöffnet werden, und die Stellung dieser Verschlussklappe (offen oder geschlossen) kann von einem dort vorhandenen Schalter durch ein gestecktes Kabel oder per Funk an das Master-Modul übertragen werden.

Für die Detektion des Einschaltzustandes einer Maschine gibt es außer den angesprochenen Stromzwischensteckern oder Wandlerspulen auch einen speziellen Maschinenfunkadapter als Signalgeber, der in eine entsprechende Buchse der Maschine nur eingesteckt werden muss.

Zum anderen sind dies Signalgeber, die beispielsweise den Über- oder Unterdruck an einem bestimmten Punkt der Entstaubungsanlage messen, oder die Temperatur, das Auftreten von Funken, den Füllstand im Staubsammelsilo oder ähnliches.

Eine weitere Variante eines Signalgebers ist ein mobiler Funkschalter, der z. B. batteriebetrieben ist und keinerlei Kabelanbindung benötigt und als Fernbedienung eingesetzt werden kann:

Er kann an der momentan benötigten Maschine z. B. per Magnet befestigt werden und sein Betätigen öffnet dann per Funk z. B. den zugehörigen Sperrschieber und/oder meldet an das Master-Modul die Schiebeöffnung bzw. Absaugbedarf an dieser Maschine.

Zum anderen gibt es Signalgeber, die gleichzeitig auch Signalempfänger sind, z. B. die Schiebesteuerungs-Module oder analog arbeitende, aktive Stromzwischenstecker.

Alle diese Signalgeber können entweder direkt per Kabel am Master-Modul eingesteckt werden, oder auch an einem Slave-Modul eingesteckt werden, von dem dann die Signale z. B. per Funk an das Master-Modul übertragen werden, oder die Signalgeber können eigenständig in einem Gehäuse untergebracht sein, in welchem auch eine Funkeinheit integriert ist.

### c) Ausführungsbeispiele

Ausführungsformen gemäß der Erfindung sind im Folgenden beispielhaft näher beschrieben. Es zeigen:

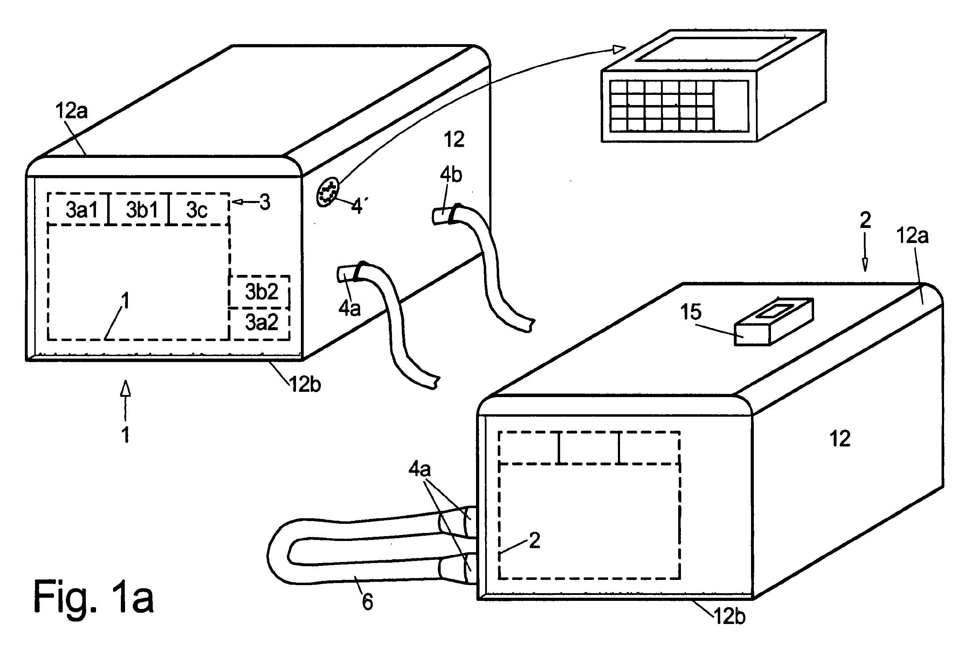

- Figur 1a:: die Hauptkomponenten der Anlagensteuerung,

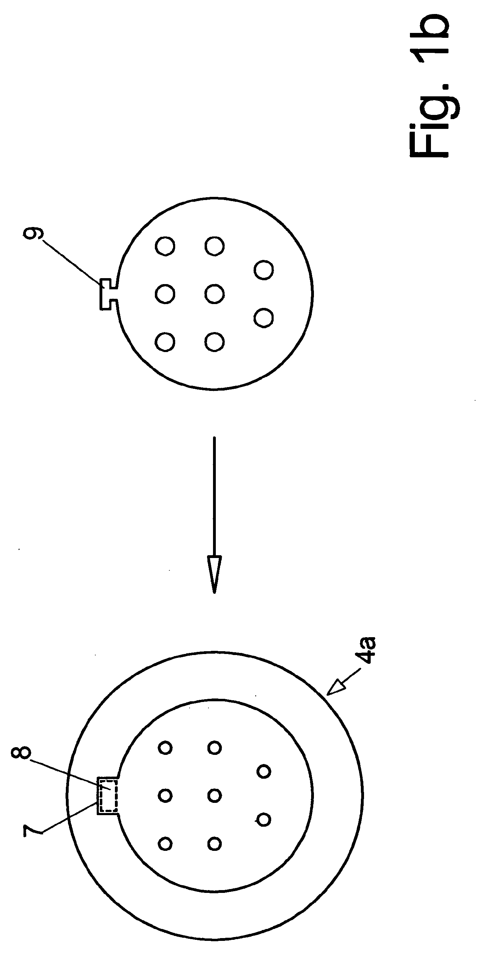

- Figur 1b:: eine mögliche Gestaltung der Anschlussbuchse und des An- schlusssteckers,
- Figur 1 c:: einen Gehäusedeckel,
- Figur 2a:: miteinander verschraubte Steuerungen,
- Figur 2b:: Stromzwischenstecker,
- Figur 3a:: eine Anlage in einer ersten Aufbauform,
- Figur 3b:: eine Anlage in einer anderen Aufbauform und
- Figur 3c:: eine Anlage mit einer sehr einfachen Aufbauform, und
- Figur 4:: das generelle Aufbauprinzip.

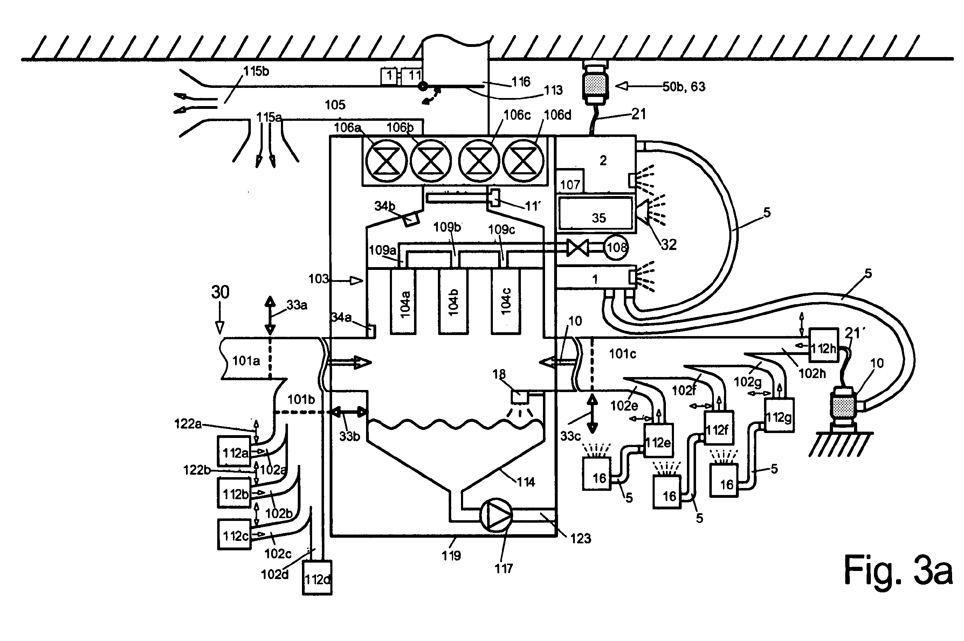

Figur 3a zeigt in einer schematischen Darstellung eine Entstaubungsanlage, deren Steuerung durch den erfindungsgemäßen Baukasten erstellt werden soll. Mit Hilfe einer solchen Entstaubungsanlage wird staubbeladene Abluft z. B. aus einer Produktionshalle, abgesaugt, gefiltert und danach in der Regel im gereinigten Zustand demselben Gebäude wieder zugeführt, um die darin enthaltene Wärmeenergie nicht durch Abgabe der erwärmten Luft an die Umgebung zu verschwenden.

Zu diesem Zweck wird die staubbeladene Luft über einzelne Zufuhrkanäle 102a, b möglichst direkt an den einzelnen Staub-Entstehungsstellen, meist produzierenden Maschinen 112a, b..., wie etwa Schweißstationen, über meist flexible Schlauchkanäle, abgesaugt und zunächst meist einem der Absaughauptkanäle 101 a, b, c zugeführt, die sich in der Regel noch vor dem zentralen Staubfilter 103 zu einem einzigen Hauptkanal vereinigen.

Mit Hilfe der stromabwärts des Filters 103, mit den einzelnen Filtern 104a, ... angeordneten Absaugventilatoren 106a, b - wobei in mobilen Anlagen meist nur ein einziger Absaugventilator 6a vorhanden ist - wird die abgesaugte Luft durch die Filterkartuschen 104a, b, c, die im Filter 103 eingebaut sind, hindurchgesaugt, wobei der in der Luft enthaltene Staub die Filterkartuschen 104a, b, c nicht durchdringen kann, sondern sich auf deren Oberfläche ansammelt.

Die so gereinigte Luft wird über einen Rückluftkanal 105, der sich gegebenenfalls in mehrere Teilkanäle aufteilen kann - was jedoch ein mobilen Anlagen ebenfalls selten ist - über darin angeordnete Auslassöffnungen 115a, b wieder als Raumluft der Halle zugeführt.

Dabei sind die Absaugventilatoren 106a, b..., die Filter 104a, b... und der Auffangbehälter 114 gemeinsam in einem fahrbaren Gehäuse 119 untergebracht, an welches sowohl die Hauptkanäle 101 a, b, c als auch der Rückluftkanal 105 anschließbar sind, nach dem dieses Gehäuse 119 der Entstaubungsanlage an die optimale Stelle innerhalb des Gebäudes bzw. der Halle positioniert wurde.

Da die sich auf der Oberfläche der Filterkartuschen 104a, b ansammelnde Staubschicht immer dicker wird und damit den Luftdurchtritt immer stärker behindert, werden diese Filterkartuschen von Zeit zu Zeit automatisch gereinigt, in diesem Fall durch Beaufschlagen der darin angeordneten Druckluftdüsen 109a, b... von einer Druckluftquelle 108 aus, so dass die Druckluft die Filterkartuschen 104a, b in Gegenrichtung zur Strömungsrichtung der zu reinigenden Luft schnell durchströmt und den angesammelten Schmutz von der Oberfläche löst, der daraufhin in den unter den Kartuschen 104a... angeordneten Auffangbehälter 114 des Filters fällt und sich dort sammelt.

Wenn der Füllstand im Auffangbehälter 114 eine bestimmte Höhe erreicht oder überschritten hat, wird der dort angesammelte Staub über eine Austragsleitung 123 entleert.

Dabei ist jeder einzelne Zufuhrkanal 102a, b mit einem eigenen Sperrschieber 122a, b verschließbar, der geschlossen ist, wenn die entsprechende Maschine 112a, b nicht arbeitet, um den von den Ventilatoren 106a, b zu bewältigenden Volumenstrom möglichst gering zu halten.

Ferner sind in den Zufuhrkanälen 102a, b meist kurz vor den Mündungen der einzelnen Absaug-Hauptkanäle 101 a, b in den Hauptkanal Brandschutzklappen 33a, b, c vorhanden, die bei Bedarf automatisch geschlossen werden, falls in einem Teil der Absauganlage ein Feuer ausbricht.

Im einen Rückluftkanal 105 ist stromabwärts des Filters - in diesem Fall noch vor den Abluftventilatoren 106a, b, - eine Partikelmessung 11' eingebaut, mit deren Hilfe automatisch bestimmt werden soll, ob in der Rückluft der meist durch den Gesetzgeber vorgegebene Höchstwert von Staub pro Volumeneinheit der Rückluft nicht überschritten wird.

In Figur 3a kann ferner eine Funkenlöschung 30 vorhanden sein.

In Figur 3a sind ferner mehrere Absaugventilatoren 106a,b,... nebeneinander vorhanden, die je nach Leistungsbedarf einzeln oder in beliebiger Gruppenbildung bis hin zur Gesamtanzahl gleichzeitig im Einsatz sein können.

Der Bedarf richtet sich danach, welche der einzelnen Sperrschieber 122a, b sich in der offenen Stellung befinden, also welche Maschinen 112a, b in Betrieb sind, was über entsprechende Sensoren (Stromzwischenstecker 10 oder Schiebersteuerungs-Module 16) dem Master-Steuerungs-Modul, hier dem Filter-Steuerungs-Modul 1, gemeldet wird, das daraufhin eine entsprechende Filter-Anzahl von Absaugventilatoren 106a, b... in Betrieb nimmt, unter Vermittlung des Ventilatorsteuerungs-Moduls 2.

Das Ventilatorsteuerungs-Modul 2 umfasst dabei auch einen Frequenzumrichter 107, um den einen oder die mehreren Absaugventilatoren 106a, b,... hochzufahren sowie gegebenenfalls eine - z. B. über Funk angebundene - Eingabeeinheit 35, um in die Steuerung 2 Vorgaben einzugeben, und ebenso eine Hupe 32 als akustisches Warnsignal, zusätzlich zur visuellen Störmeldung am Display.

Damit das Ventilatorsteuerungs-Modul 2 die Absaugleistung bedarfsgerecht steuern kann, also bei einem einzigen Absaugventilator dessen Drehzahl verändern kann oder bei mehreren Absaugventilatoren 106a, b - wie im dargestellten Fall - diese in entsprechender Anzahl hochfahren kann, muss das Ventilatorsteuerungs-Modul 2 den momentanen Bedarf an Absaugleistung kennen, indem sie Eingangssignale z. B. per Funk von den Signalgebern erhält, welche der Maschinen 112a, b.. in Betrieb sind und abgesaugt werden müssen und dementsprechend welche Sperrschieber 122a,... geöffnet sind.

In der Regel sind dabei die Antriebe der Sperrschieber 122a,... mit den Antrieben der Maschinen 112a, b so gekoppelt, dass bei Einschalten der Maschine z. B. 112a, auch der Antrieb des Sperrschiebers 122a Strom erhält und den Sperrschieber 22a in die geöffnete Position bewegt und dort hält.

Es genügt dann, dass das Ventilator-Steuerungs-Modul 2 ein Signal erhält, ob der Antriebsmotor der Maschine 112a,... in Betrieb ist oder nicht, also ob der in aller Regel elektrische Antriebsmotor dieser Maschine 112a Strom aus dem Netz zieht oder nicht.

Aus den vorstehenden Ausführungen wird klar, dass an der Absauganlage zwei Dinge im Wesentlichen getrennt voneinander gesteuert werden müssen, nämlich
- einerseits Ein- und Ausschalten bzw. Leistungswahl der Absaugventilatoren 106a.., was mittels Master-Steuerungs-Modul entschieden wird und gegebenenfalls an das Ventilatorsteuerungs-Modul 2 weitergegeben wird zwecks Umsetzung.
- andererseits Zeitpunkt, Häufigkeit und Dauer der Aktivierung der Filterreinigung, was durch das Filtersteuerungs-Modul 1 erfolgen soll.

Diese beiden Steuerungs-Module 1 und 2 wirken hier per Kabel 5 zusammen als Anlagensteuerung.

Figur 1a zeigt zum einen das Filtersteuerungs-Modul 1 und zum anderen das Ventilatorsteuerungs-Modul 2, die jeweils in einem eigenen Steuerungs-Gehäuse 12, hier in kubischer Form, aufgenommen sind, welches von einem Deckel 12a verschlossen ist, und einen Boden 12b aufweist.

Das Filtersteuerungs-Modul 1 enthält neben der eigentlichen Filtersteuerung weitere Einheiten, in diesem Fall eine Funkeinheit 3, um drahtlos z.B. mit anderen Modulen oder Signalgebern kommunizieren zu können.

Diese Funkeinheit 3 enthält zu diesem Zweck jedoch nicht nur einen Funksender 3a1 ..., sondern auch einen Funkempfänger 3b1... und darüber hinaus einen meist Software unterstützten Funkverstärker 3c, für den Fall, dass eine Funkstrecke von der Entfernung zu groß ist und über einen Verstärker vermittelt werden muss. Darüber hinaus können für bestimmte Anwendungen Funksender 3a1, 3a2 und Funkempfänger 3b1, 3b2 jeweils doppelt vorhanden sein, um auf zwei getrennten Frequenzen, also Kanälen, senden und empfangen zu können, also Funkverkehr für zwei prinzipiell getrennte Zwecke durchführen zu können, beispielsweise auf dem einen Kanal nur Funksignale von Sperrschiebern zu bearbeiten und auf dem anderen Kanal alle anderen Signale.

Auf der Außenseite des Gehäuses weist das Filtersteuerungs-Modul mehrere Anschlussbuchsen 4 auf, die eine von Standardanschlussbuchsen abweichende Gestaltung und/oder Pinanordnung aufweisen - wie in Figur 1b für die Buchse und den zugehörigen Stecker dargestellt - die wahlweise für Füllstand, Druck, Ventilstellung oder andere Signale als Eingang oder Ausgang benutzt werden können.

Diese Anschlussbuchsen 4 dienen als Geberanschlussbuchsen 4a dem Anstecken eines Kabels, etwa kombinierten Signal-Stromübertragungskabels 5, von dem Filtersteuerungs-Modul 1 zu einem anderen Modul.

Daneben weist das Filtersteuerungs-Modul 1 eine Bus-Anschlussbuchse 4b auf, das keine Stromübertragung enthält und dem Anschluss eines PCs dient oder der reinen Datenübertragung über einen Datenbus an weitere Module wie etwa ein weiteres Filtersteuerungs-Modul 1 oder an einem PC dient, was jedoch alternativ auch per Funk erfolgen kann.

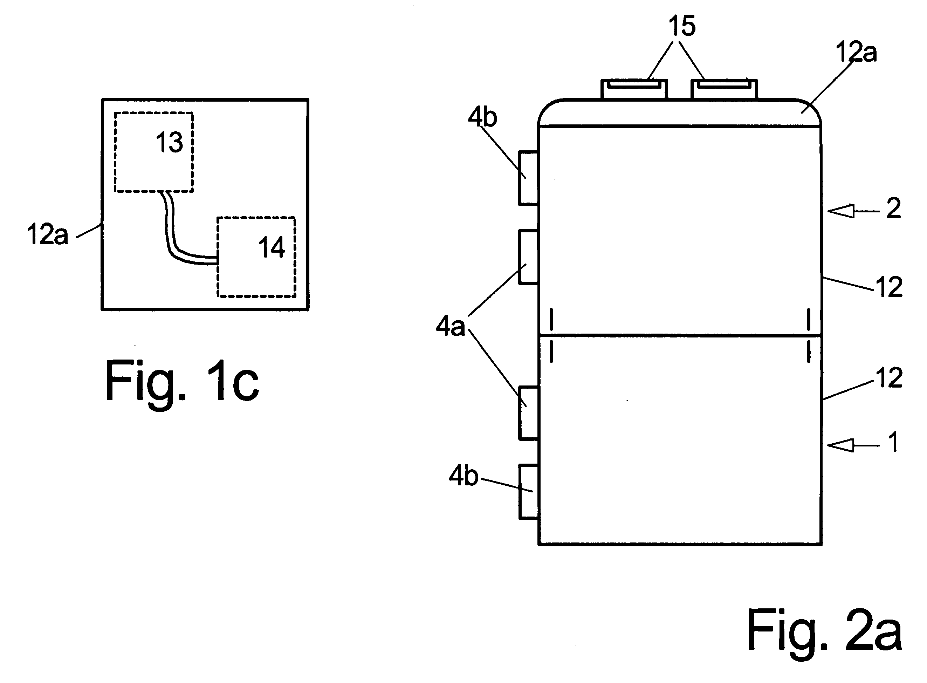

Im Deckel 12a des Steuerungs-Gehäuses 12 des z. B. Filtersteuerungs-Moduls 1 ist - wie in Figur 1c schematisch dargestellt - ferner ein Trafo 13 untergebracht, um den z. B. über eine Anschlussbuchse 4 angelieferten Strom auf die von dem Filtersteuerungs-Modul 1 benötigte Betriebspannung zu transformieren.

Zusätzlich oder alternativ kann im Deckel 12a auch ein Stromgenerator 14 angeordnet sein, der Strom für den Betrieb des Filtersteuerungs-Moduls 1 erzeugt aus den physikalischen oder chemischen Umgebungsbedingungen am Einsatzort, also aus Druck, Temperatur, Luftströmung oder ähnlichem. Ein bevorzugter Fall wird hier das Ausnützen der Luftströmung in den Zufuhrkanälen oder Rückluftkanälen sein.

Wie Figur 1a weiterhin zeigt, ist in dem Steuerungs-Gehäuse 12 der Ventilatorsteuerungs-Moduls 2 die eigentliche Ventilatorsteuerung 2 untergebracht, jedoch keine Funkeinheit.

Auch das Ventilatorsteuerungs-Modul 2 weist an der Außenseite ihres Steuerungs-Gehäuses 12 die erwähnten Geberanschlussbuchsen 4a für kombinierte Strom- und Datenübertragung wie das Filtersteuerungs-Modul 1 auf, wovon mindestens zwei vorhanden sind, von denen mindestens eine für den Anschluss von Differenz-Druck-Sensoren und die andere für das Ansteuern der Reinigungsvorrichtung benötigt wird.

Des Weiteren ist am Steuerungs-Gehäuse 12 ein Ein-/Ausschalter 15 mit Hand/Automatik-Umschalter für die Ventilatoren 106a,... angebracht, um diese manuell ein- und ausschalten zu können. Dieser Ein-/Ausschalter 15 ist vorzugsweise im Deckel 12a untergebracht, so dass der Baukasten unterschiedliche Deckel umfassen kann, nämlich wahlweise mit und ohne einem solchen Ein-/Ausschalter 15, Trafo 13 und/oder Stromgenerator 14.

Die mindestens zwei Anschlussbuchsen 4a können über ein Rückkopplungskabel 6 direkt miteinander verbunden werden, für den Fall, dass die Anlagensteuerung nur aus einem Ventilatorsteuerungs-Modul 2 bestehen soll, denn in diesem Fall verfügt die Anlage über kein eigenes Filtersteuerungsmodul.

Figur 1b zeigt in der Aufsicht links eine Anschlussbuchse 4 und rechts einen dazu passenden Stecker.

Bei der Anschlussbuchse 4 ist erkennbar, dass im die Pins umgebenden Kragen, in welchen der Stecker eingesteckt wird, wenigstens eine Aussparung 7 vorhanden ist, in die eine entsprechende Nase 9 des dazu passenden Steckers beim Einstecken eingreift. Diese Aussparung 7 kann jedoch durch ein einzusteckendes Passstück 8 verschlossen werden, und ebenso kann von dem entsprechenden Stecker die entsprechende Nase 9 abgebrochen werden, weshalb sie vom Querschnitt her vorzugsweise T-förmig ausgebildet ist.

Eine ebenso gestaltete Buchse befindet sich an dem Stromzwischenstecker 10 oder an der Maschine 112a.., um dort den Stromfluss zu erfassen.

Auf diese Art und Weise können einzelne Anschlussbuchsen 4 an dem Filtersteuerungs-Modul 1 oder der Ventilatorsteuerung 2 individualisiert werden, und in gleicher Weise die drin einzusteckenden Kabel individualisiert werden, um eine spezifische Verbindung vorgegebener individualisierter Anschlussbuchsen 4a und damit für einen vorbestimmten Zweck mittels eines passenden Kabels zu erreichen.

Abmessungen und auch Pinanordnungen der Anschlussbuchse 4 als auch des zugehörigen Steckers sind so gewählt, dass sie nicht mit Standardbuchsen und Steckern aus dem Bereich der Elektrotechnik übereinstimmen.

Figur 2a zeigt ein Ventilatorsteuerungs-Modul 2, das mit der offenen Unterseite ihres Steuerungs-Gehäuses 12 auf die offene Oberseite des Steuerungs-Gehäuses 12 eines Filtersteuerungs-Moduls 1, das also keinen Deckel aufweist, aufgesetzt ist, wobei die Steuerungs-Gehäuse 12 miteinander verschraubt sind. Dies ist möglich, wenn die Steuerungs-Gehäuse 12 von dem Filtersteuerungs-Modul 1 und Ventilatorsteuerungs-Modul 2 die gleichen Abmessungen in der Aufsicht betrachtet besitzen und insbesondere identisch sind.

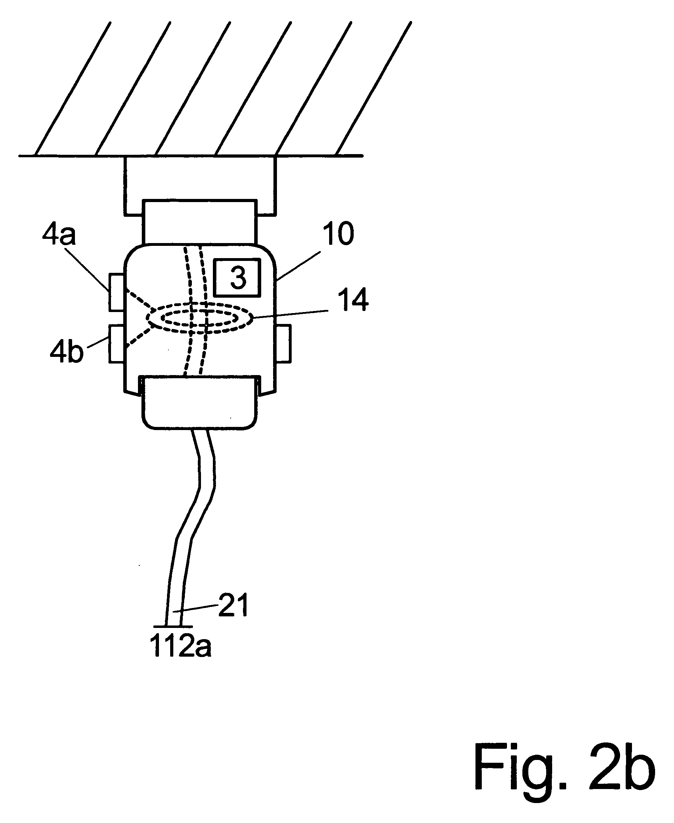

Figur 2b zeigt einen Strom-Zwischenstecker 10, der in die Stromanschlussleitung 21 einer Maschine 112a zwischengesteckt werden kann und der detektiert, ob die Maschine 112a eingeschaltet ist, also Strom aus dem Netz entnommen wird, oder nicht.

Zu diesem Zweck ist in dem Stromzwischenstecker 10 beispielsweise eine den Stromfluss kontaktlos detektierende Wandlerspule 14 eingebaut.

Ob Strom fließt oder nicht, kann per Funkeinheit 3 oder über die alternativ wenigstens eine vorhandene Anschlussbuchse 4 von dem Strom-Zwischenstecker 10 weitergemeldet werden.

Der Stromzwischenstecker 10 ist also einer der Sensoren, der über ein Kombinationskabel 5 mit z.B. einem Filtersteuerungs-Modul 1 verbunden wird, damit dieses einerseits die Information über Betrieb oder Nichtbetrieb der angeschlossenen Maschine erhält und auf diesem Wege auch ihren Betriebsstrom.

Mit Hilfe dieser Bausteine können unterschiedliche Anlagensteuerungen auf einfache Art und Weise und ohne vom Elektriker durchzuführende, aufwendige Installationsarbeiten erstellt werden.

Die Stromzwischenstecker 10 besitzen nicht immer integrierte Funkeinheiten. Wenn von einem der Stromzwischenstecker 10 ein Signal per Funk drahtlos über eine weite Strecke gesendet werden soll - oder von einem aktiven Stromzwischenstecker 10, der den Stromschluss schalten kann, auch empfangen werden soll - wird an eine der Anschlussbuchsen 4 des Stromzwischensteckers 10 zu diesem Zweck ein Modul mit Funkeinheit 3 angeschlossen, das dann ausschließlich als Funkstation dient.

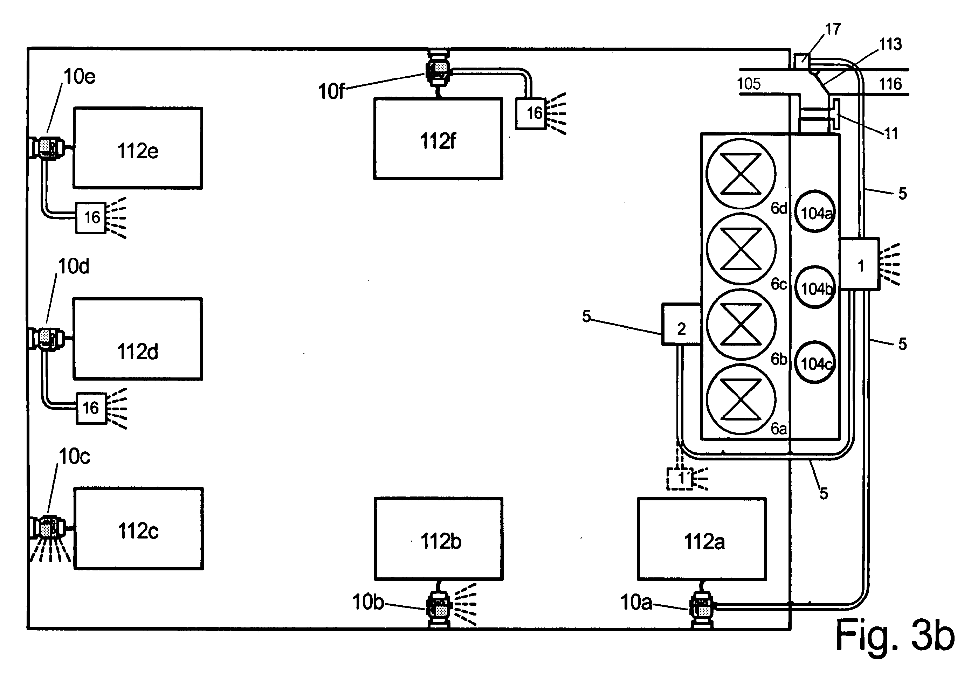

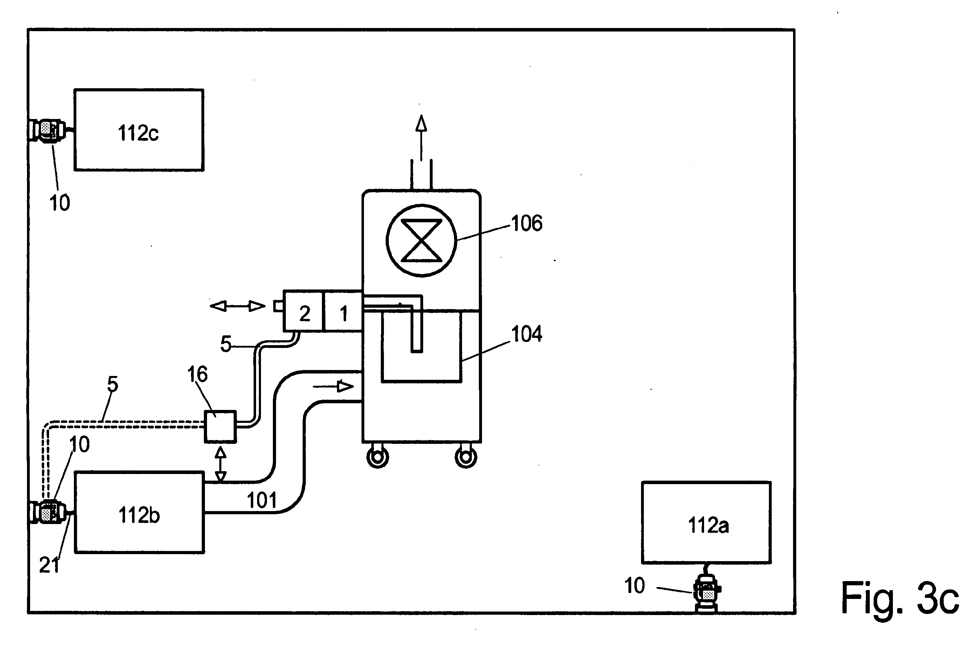

Die Figuren 3b und 3c zeigen andere Konfigurationen von Entstaubungsanlagen und der zugehörigen Anlagensteuerung, wie sie mit dem erfindungsgemäßen Bausatz zusammengestellt werden können:

In Figur 3b ist in der Aufsicht eine Produktionshalle gezeichnet, in der mehrere produzierende Maschinen 112a-f aufgestellt sind.

An einer Stirnseite der Halle befindet sich auf der Außenseite der Halle die Filteranlage mit Filtern 104a-c und einem daran angeordneten Filtersteuerungs-Modul 1, während sich an gleicher Stelle noch im Inneren der Halle mehrere Absaugventilatoren 106a, b... befinden, die von einem Ventilatorsteuerungs-Modul 2 gesteuert werden.

Von den Sensoren an den einzelnen Maschinen 112a, b,..., die hier als Stromzwischenstecker 10a,... ausgebildet sind, erhält das Filtersteuerungs-Modul 1 seine Signale wie bei Maschine 112a entweder per Kombinationskabel 5 - und dann auch über dasselbe Kabel 5 den benötigten Betriebsstrom - oder per Funk, was bei den weiter entfernten Maschinen 112b-f der Fall ist, und zwar über die Funkeinheit 3 der Stromzwischenstecker 10b,c oder der Schiebsteuerungs-Module 16, die daran angeschlossen sind.

Das Ventilatorsteuerungs-Modul 2 ist mit dem Filtersteuerungs-Modul 1 wahlweise - abhängig von der Entfernung - über ebenfalls ein Kombinationskabel 5 gekoppelt oder auch über Funk. Dann jedoch ist wie alternativ in Figur 3b eingezeichnet, an diesem Ventilatorsteuerungs-Modul 2 eine weiteres Filtersteuerungs-Modul 1 per Kabel angeschlossen, das dann lediglich als Funküberträger zu dem eigentlich als Filtersteuerung arbeitenden Filtersteuerungs-Modul 1 dient.

In Figur 3b ist - ebenso wie in Figur 3a - ferner ein Reststaubsteuerungs-Modul 17 vorhanden, der in einem separaten Gehäuse untergebracht ist, und die Stellung der Klappe 113 steuert, die die von den Filtern 104a, ... kommende Rückluft wahlweise in den Rückluftkanal 105 umleitet, der im Inneren der Produktionshalle ausläuft, oder in den Fortluftkanal 116, der die Luftwegen zu hohem Staubanteil ins Freie abgibt.

Das Reststaubsteuerungs-Modul 17 ist mit einem speziellen Sensor verbunden, dem Reststaubsensor 11, der den Reststaubgehalt zwischen den Filtern 104a, b und der Schaltklappe 113 misst. Sowohl der Reststaubsensor 11 als auch das Reststaubsteuerungs-Modul 17 weisen wiederum dieselben Anschlussbuchsen 4a.. auf und können mittels eines Kombinationskabels 5 verbunden werden.

Ebenso ist der separate Reststaubsensor 11 mit dem Filtersteuerungs-Modul 1 verbunden, und zwar in Figur 3b aufgrund geringer Entfernung wiederum mittels eines der Kombinationskabel 5, in Figur 3a wegen der größeren Entfernung per Funk, weshalb dort der Reststaubsensor 11 per kurzem Kabel mit einer dort vor Ort angeordneten weiteren Filtersteuerungs-Modul 1 gekoppelt ist, das wiederum nur als Funküberträger dient.

Figur 3c zeigt eine gegenüber den Figuren 3a und b sehr viel einfachere Konstellation, bei der in einer Produktionshalle beispielsweise nur drei Produktionsmaschinen 112 a - c stehen, die jedoch nicht immer gleichzeitig betrieben werden, sondern meistens nur abwechselnd.

Deshalb ist hierfür eine sehr einfache, mobile Entstaubungsanlage ausreichend, die wahlweise immer in die Nähe der momentan produzierenden Maschine, z. B. 112b, geschoben und mit dieser oder mehreren benachbarten Maschinen über einen schlauchförmigen flexiblen Absaughauptkanal 101 für das Absaugen von Luft verbunden wird.

An dieser mobilen Entstaubungsanlage ist an deren Gehäuse außen ein Filtersteuerungs-Modul 1 und ein Ventilatorsteuerungs-Modul 2 angeordnet, wie sie hinsichtlich ihrer einzelnen Steuerungs-Gehäuse 12 aneinander gesetzt und miteinander verschraubt sind, wie in Figur 2a erläutert.

Das Filtersteuerungs-Modul 1 ist mit dem Schiebersteuerungsmodul 16 am Sperrschieber der abzusaugenden Maschine 112b verbunden, der sein Eingangssignal vom den Stromfluss detektierenden Stromzwischenstecker 10 in der Stromleitung 21 der Maschine 112b erhält, und da die mobile Entstaubungsanlage ja in die Nähe der Maschine geschoben wird, ist die Entfernung so gering, dass dies problemlos über Kombinationskabel 5 möglich ist.

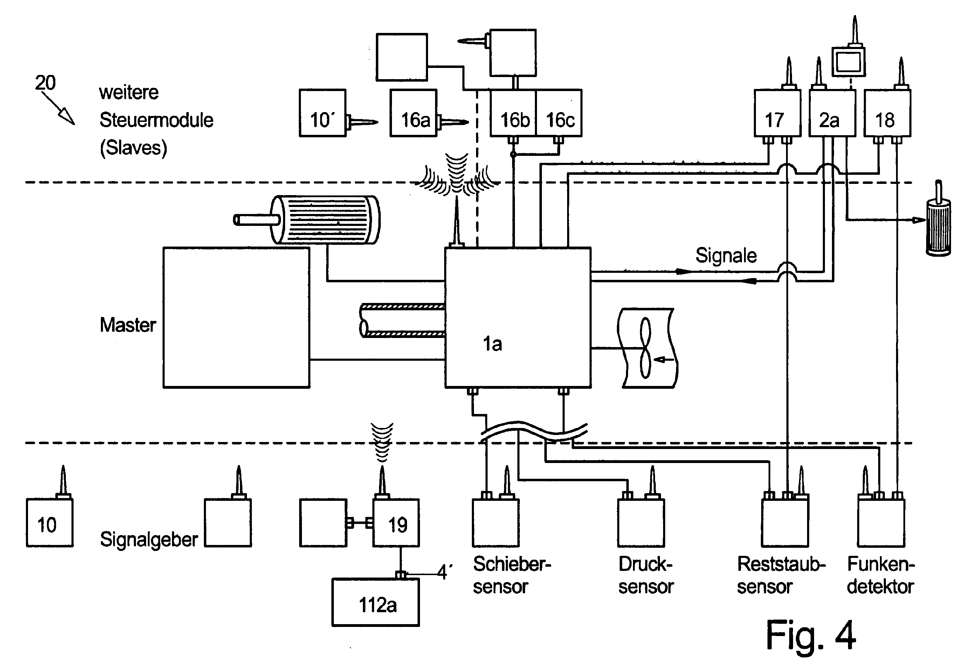

Figur 4 zeigt den prinzipiellen Aufbau einer Entstaubungsanlagensteuerung 20 aus dem modularen Baukasten gemäß der Erfindung:

Dabei fungiert ein Steuerungsmodul, in diesem Fall das Filtersteuerungsmodul 1a, als Master und ist hierarchisch allen anderen etwaig vorhandenen anderen Steuerungsmodulen, die dementsprechend als Slaves bezeichnet werden können, hierarchisch übergeordnet.

Diese Slaves können - wie im oberen Drittel dargestellt - aktive, also den durch sie hindurchführenden Stromfluss steuernde, Stromzwischenstecker 10' sein und/oder Schiebersteuerungsmodule 16a-c und/oder ein Reststaubsteuerungsmodul 17 und/oder ein Ventilatorsteuerungsmodul 2a und/oder ein Funkenlöschsteuerungsmodul 18.

Die Verbindung des als Master dienenden, hier Filtersteuerungsmoduls 1a, mit den als Slaves arbeitenden weiteren Steuerungsmodulen erfolgt wahlweise per Funk oder per Kabel, insbesondere der gleichzeitig Strom übertragenden Kabel 5.

An den Schiebersteuerungsmodulen 16d und 16c ist dargestellt, dass beide gemeinsam von einem einzigen Signalausgang des Filtersteuerungsmoduls 16b über ein verzweigtes Kabel angesteuert werden können. Bei dem Filtersteuerungsmodul 16b ist ferner der damit verbundene und von diesem angesteuerte Schieberantrieb symbolisch dargestellt und ebenso die damit signaltechnisch verbundene Maschine 112b, von der das Schiebersteuerungsmodul 16b sein Eingangssignal erhält. Alternativ oder zusätzlich kann die Maschine 112b ihren Einschaltzustand auch direkt an das Mastermodul, also das Filtersteuerungsmodul 1a, senden.

An dem Ventilatorsteuerungsmodul 2a kann unmittelbar oder entfernt ein Display und/oder eine Eingabeeinheit angeordnet sein, und mit dieser Ventilatorsteuerung 2a ist häufig auch signaltechnisch ein Austragsmotor für einen Austrag des angesammelten Staubes aus dem Staubsammelbehälter angekoppelt.

Das Filtersteuerungsmodul 1a als Master fungiert auf Basis von Eingangssignalen, die es von diversen Signalgebern erhält, beispielsweise einem Funkendetektor, einem Reststaubsensor, einem Drucksensor, einem Schieberstellungssensor, einem Stromzwischenstecker 10, der den Einschaltzustand unterschiedlicher Geräte detektieren kann, oder auch von einem Maschinenfunkadapter 19, der eine hierfür vorgesehene Buchse, deren Form insbesondere den Buchsen in Fig. 1b entspricht, in der Maschine z. B. 112a eingesteckt werden kann und deren Einschaltzustand an den Master sendet.

Eine weitere Möglichkeit ist ein mobiler Schalter, der in der Nähe eines einzuschaltenden Aggregates, z. B. einer Schiebersteuerung, angebracht werden kann und sowohl seine aktive Steuerungsfunktion per Funk durchführt als auch die Weitermeldung der durchgeführten Schalthandlung an das Mastermodul.

Auch alle übrigen Signalgeber sind signaltechnisch mit dem Master wahlweise drahtlos, insbesondere per Funk, oder per Kabel verbunden, je nach Abstand zueinander, und je nachdem, ob vor allem die Signalgeber eine entsprechende Funkeinheit beinhalten.

Wie die Figur 4 weiterhin im mittleren Bereich zeigt, kann an ein solches Filtersteuerungsmodul 1a als Master ein weiteres Mastermodul angeschlossen werden, welches beispielsweise die Weiterverarbeitung des angesammelten Filterstaubes oder Ähnliches mit einer separaten Anlagensteuerung steuert, wofür jedoch kommunikativer Austausch zwischen den beiden Anlagensteuerungen und damit deren Mastermodulen notwendig ist.

Der mittlere Bereich der Fig. 4 zeigt ferner, dass das Filtersteuerungsmodul 1a als Mastermodul mit einer Stromerzeugungseinheit, etwa einem kleinen Windrad, gekoppelt sein kann und darüber hinaus auch Aggregate wie einen Elektromotor (beispielsweise einen Rüttelmotor eines Filters) direkt elektrisch angeschlossen hat oder pneumatische Aggregate wie etwa ein Pilotventil oder Reinigungsventil über eine Rohrleitung angeschlossen sein kann, welche an einem Pilotventil in dem Filtersteuerungsventil 1 aus mit Druckluft versorgt wird.

### BEZUGSZEICHENLISTE

- 1a,b..., 1': Filtersteuerungs-Modul
- 2a,b....: Ventilatorsteuerungs-Modul
- 3: Funkeinheit
- 3a: Funkempfänger
- 3a1, 3a2: Funkempfänger
- 3b: Funksender
- 3b1,3b2: Funksender
- 3c: Funkverstärker
- 4: Anschlussbuchsen
- 4': Maschinenbuchse
- 4a: Geberanschlussbuchse
- 4b: Busanschlussbuchse
- 5: Kombinationskabel
- 6: Rückkopplungskabel
- 7: Aussparung
- 8: Passstücke
- 9: Nasen
- 10;10': Strom-Zwischenstecker
- 11: Reststaubsensor
- 12: Steuerungs-Gehäuse
- 12a: Deckel
- 12b: Boden
- 13: Trafo
- 14: Wandlerspulen
- 15: Ein-/Aus-Schalter
- 16: Schiebersteuerungs-Modul
- 17: Reststaubsteuerungs-Modul
- 18: Funkenlöschsteuerungs-Modul
- 19: Maschinenfunkadapter
- 20: Anlagensteuerung
- 21: Stromanschlussleitung
- 32: Hupe
- 33a,b,c: Brandschutzklappe
- 35: Eingabeeinheit
- 101: Absaughauptkanal
- 101 a, b: Hauptkanal
- 102a, b: Zufuhrkanäle
- 103: Staubfilter
- 104a: Filter
- 105: Rückluftkanal
- 106a, b: Absaugventilator
- 107: Frequenzumrichter
- 109a: Druckluftdüse
- 112a, b: Maschinen
- 114: Auffangbehälter
- 115a: Auslassöffnung
- 116: Fortluftkanal
- 119: Gehäuse
- 122a: Sperrschieber
- 123: Austragsleitung

## Patentansprüche

1. Modularer Baukasten für eine Entstaubungsanlagen-Steuerung (20), mit
- einem Filtersteuerungs-Modul (1a, b...), und
- einem Ventilatorsteuerungs-Modul (2a, b...),von denen eines als Master-Modul fungiert,
- wenigstens einem Signalgeber und wenigstens einem Signalempfänger, wobei
- die Module (1a..., 2a...) jeweils in einem separaten SteuerungsGehäuse (12) angeordnet sind,
- jedes Steuerungsgehäuse (12) wenigstens eine Anschlussbuchse (4) für eine kombinierte Signal- und Stromübertragung aufweist,
- wenigstens im Master-Modul auch eine Funkeinheit (3) untergebracht ist, **dadurch gekennzeichnet, dass**
- der Baukasten die dazu passenden Kombinationskabel (5) umfasst für gleichzeitige Signal- und Stromübertragung,
- der Baukasten auch ein Schiebersteuerungs-Modul (16) und ein Reststaubsteuerungs-Modul (17) umfasst,
- die Signalgeber und die Signalempfänger der Entstaubungs-Anlagensteuerung (20), insbesondere auch die Steuerungsmodule (1a, 2a, 16, 17, ...), entweder drahtlos, insbesondere mittels Funksignalen, miteinander verbindbar sind, oder mittels gesteckter Kabel, die entweder Spezialkabel für die Buchsen (4), insbesondere Kombinationskabel (5), oder die Kabel eines bereits vorhandenen Stromnetzes sind, und
- Maschinen (112a) zugeordnete Signalgeber dazu eingerichtet sind, als Strom-Zwischenstecker (10) in der Stromanschlussleitung der Maschine angeordnet zu werden.

2. Baukasten nach Anspruch 1,
**dadurch gekennzeichnet, dass**
- die Funkeinheit (3) mindestens einen Funkempfänger (3a), insbesondere auch einen Funksender (3b), und vorzugsweise auch einen Funkverstärker (3c) umfasst, und/oder
- der Baukasten ein Funkenlöschsteuerungs-Modul (18) umfasst, und/oder
- eines der Kombinationskabel ein Rückkopplungskabel (6) ist, um die beiden Anschlussbuchsen der Ventilatorsteuerung (2a, b...) miteinander zu verbinden, insbesondere direkt miteinander zu verbinden.

3. Baukasten nach einem der vorhergehenden Ansprüche,
**dadurch gekennzeichnet, dass**
die Anschlussbuchsen (4)
- entweder Geber-Anschlussbuchsen (4a) zum Anschließen von Signalgebern, insbesondere Stromflusssensoren, Schaltern von Sperrschiebern sind, Drucksensoren, Temperatursensoren, als auch von Signalempfängern, insbesondere Rüttelmotoren, Hupen, Sperrschieberantrieben und insbesondere eine kombinierte Signal-/Stromübertragung zulassen
- oder Bus-Anschlussbuchsen (4b) zum Anschließen weiterer Steuerungs-Module oder zum Anschließen eines PCs, eines Displays, einer SPS-Steuerung und insbesondere ein reiner Datenanschluss oder Formatwandler in andere Datenformate ist, also ohne StromÜbertragung, und/oder
- die Anschlussbuchsen (4) Aussparungen (7) aufweisen, die von Passstücken (8) verschlossen werden können, und die dazu passenden Anschlussstecker der Kabel, insbesondere Kombinationskabel (5), Nasen (9) aufweisen, die in die Aussparungen passen, und die Nasen (9) entfernbar, insbesondere abbrechbar sind.

4. Baukasten nach einem der vorhergehenden Ansprüche,
**dadurch gekennzeichnet, dass**
- das Master-Modul, insbesondere das Filtersteuerungs-Modul (1a) zwei getrennte Funkempfänger (3a1, 3a2), insbesondere auch zwei getrennte Funksender (3b1, 3b2), aufweist, von denen der eine nur Signale von Sperrschiebern verarbeitet, der andere auf einer anderen Frequenz alle anderen Signale verarbeitet.

5. Baukasten nach einem der vorhergehenden Ansprüche,
**dadurch gekennzeichnet, dass**
- der Baukasten Ventilatorsteuerungs-Module (2a...) in mehreren Leistungsstufen umfasst, und/oder
- der Baukasten Wandlerspulen (14) als Stromflusssensoren umfasst, die insbesondere den gemessenen Stromfluss automatisch auswerten und den daraus ermittelten Schwellenwert, wann Stromfluss vorliegt, automatisch abspeichern und in Abhängigkeit davon ein Signal abgeben, und/oder
- der Baukasten Strom-Zwischenstecker (10) umfasst, die einen Stromflusssensor enthalten sowie eine Anschlussbuchse für die Kombinationskabel (5) zum Abgriff des Stromflusssignales, und/oder
- wenigstens eines der Steuerungsmodule (1a, b.., 2a, b...), insbesondere die darin enthaltene Funkeinheit (3) und/oder der Stromzwischenstecker (10), ein Modulationsmodul aufweist, um Signale durch Aufmodulieren auf das vorhandene Stromnetz zu übertragen.

6. Baukasten nach einem der vorhergehenden Ansprüche,
**dadurch gekennzeichnet, dass**
- das Ventilatorsteuerungs-Modul (2) ein Zählwerk, insbesondere einen Software-basierten Zähler, zum Aufsummieren der laufenden Maschinen und/oder offenen Sperrschieber, insbesondere der Querschnitte der offenen Sperrschieber, aufweist, und/oder
- wenigstens ein Ventilatorsteuerungs-Modul (2) und/oder wenigstens einer der Signalgeber einen Schalter zum manuellen Ingangsetzen des Absaugventilators (106a..) aufweist, und/oder
- das Ventilatorsteuerungs-Modul (2a, b) eine Abschaltverzögerung aufweist, die bewirkt, dass beim Abschalten der letzten angeschlossenen Maschine (112a...) der Absaugventilator (106a...) zeitversetzt hierzu später abschaltet, und/oder
- der Reststaubsensor (11), insbesondere auch alle Steuerungs-Module, eine Funkeinheit (3), insbesondere die gleiche Funkeinheit (3) wie das Filtersteuerungs-Modul (1a, b), enthält.

7. Baukasten nach einem der vorhergehenden Ansprüche,
**dadurch gekennzeichnet, dass**
das Ventilator-Steuerungsmodul (2a,b) und/oder das Filtersteuerungs-Modul (1a)
- entweder einen Trafo (13) zur Anpassung der angelieferten Spannung an die von dem Steuerungsmodul (1a,b, 2a,b) benötigte Spannung umfasst und/oder
- eine eigene Stromquelle, insbesondere einen Stromerzeuger (14) umfasst, der von Temperatur, Druck oder Luftströmung, insbesondere Druckluft, angetrieben wird, und
- die Stromaufbereitung oder Stromerzeugung insbesondere im Deckel (12a) des Steuerungs-Gehäuses (12) angeordnet ist und insbesondere der Baukasten verschiedene Deckel mit diesen unterschiedlichen oder gemeinsamen Inhalten aufweist.

8. Baukasten nach einem der vorhergehenden Ansprüche,
**dadurch gekennzeichnet, dass**
- die Steuerungsmodule, insbesondere das Ventilatorsteuerungs-Modul (2a) eine solches Steuerungsgehäuse (12) aufweist, welches auf das Steuerungsgehäuse (12) des Master-Moduls, insbesondere des Filtersteuerungs-Moduls (1a) passt und mit diesem verschraubt werden kann, und/oder
- der Baukasten ein Ventilatorsteuerungs-Modul (2a) umfasst, das auch wenigstens einen Frequenzumrichter sowie Anschlussbuchsen (4)
- für einen Potentiometer, mit dem die Frequenz am Frequenzumrichter manuell einstellbar ist oder
- für einen Differenzdruckmesser enthält, so dass der Frequenzumrichter abhängig von den Messwerten des Differenzdruckmessers vor und hinter dem Filter die Frequenz des Ventilatormotors umschaltet.

9. Baukasten nach einem der vorhergehenden Ansprüche,
**dadurch gekennzeichnet, dass**
- die Signalgeber außer dem Signal für den Stromfluss in der Stromversorgung der Maschine (112a, b..) ein Signal für die Strömungsgeschwindigkeit der Luft im Zufuhrkanal von der Maschine aufweist, und/oder
- der Signalgeber eine insbesondere optische Betriebsanzeige und/oder Störungsanzeige betreffend den Signalgeber aufweist, insbesondere in Form von Leuchtdioden (53), und/oder
- der der Maschine zugeordnete Signalgeber eine Warnanzeige (56) für zu hohen Reststaubgehalt der Rückluft aufweist, und/oder
- in den Zufuhrkanälen (102a, b) Sperrschieber (122a, b) angeordnet sind und der Antrieb jedes Sperrschiebers (122a, b) mit dem jeweiligen Signalgeber verbunden ist und von diesem angesteuert wird, insbesondere parallel und zeitgleich zum Ingangsetzen des Absaugventilators (106a, b).

10. Baukasten nach einem der vorhergehenden Ansprüche,
**dadurch gekennzeichnet, dass**
- in den Zufuhrkanälen (2a, b) Sperrschieber (22a, b) angeordnet sind, deren Antriebe mit dem Antrieb der jeweiligen Maschine gleichzeitig mit Strom versorgt und mit dem Einschalten der Maschine geöffnet wird, und/oder
- die Signalgeber in unterschiedlichen Stromstärkenbereichen entsprechend der Versorgungsleistung der anzuschließenden Maschine vorliegen oder zwischen diesen Bereichen umschaltbar sind, und/oder
- die Signalgeber einen Anschluss, insbesondere einen Steckanschluss für eine Signalleitung zum Sperrschieber (122a..) aufweisen, um diese zum Öffnen oder Schließen anzusteuern.

11. Baukasten nach einem der vorhergehenden Ansprüche,
**dadurch gekennzeichnet, dass**
- das Master-Modul, insbesondere das Filtersteuerungs-Modul (1a) eine Aufzeichnungseinheit für die Aufzeichnung der aktuellen Leistungswerte sowohl aller Motoren der Entstaubungsanlage als auch der an die Entstaubungsanlage angeschlossenen Maschinen (112a...) umfasst und deren Energieverbrauch angezeigt, über die Zeit aufsummiert und/oder archiviert, und insbesondere auch Mittelwerte und Spitzenwerte des Energieverbrauches automatisch berechnet, und/oder
- der Signalgeber eine Eingabeeinheit (54) zum Eingeben der Querschnitte der einzelnen Zufuhrkanäle (102a...) sowie des Querschnittes des wenigstens einen zugeordneten Hauptkanals (101a...) umfasst.

12. Verfahren zum Anschließen einer Absauganlagen-Steuerung (20), bestehend aus den Elementen des modularen Baukastens nach einem der vorhergehenden Ansprüche, an eine Entstaubungsanlage mit
- wenigstens einem Absaugventilator (106a..) mit einem Ventilatorsteuerungsmodul (2a, b..),
- wenigstens einem Absaughauptkanal (101a...), mit mehreren darin mündenden Zufuhrkanälen (102a...) mit wenigstens einem Absauganschluss.
- wenigstens einer Maschine (112a...) von der verunreinigte Luft abgesaugt und entstaubt werden soll,
- wenigstens einem Staubfilter (103), mit einem Filter-Steuerungsmodul (1a, b..)
- wenigstens einer Rückluftöffnung, insbesondere einem Rückluftkanal (105).
**dadurch gekennzeichnet, dass**
- sowohl die den einzelnen abzusaugenden Maschinen (112a..) zugeordneten Signalgeber als auch die der Entstaubungsanlage als Signalempfänger zugeordneten Steuerungsmodule (1a..., 2a..) untereinander als auch mit der jeweiligen Maschine (112a) einerseits sowie der Entstaubungsanlage andererseits per Funk oder mittels steckbarer Kabel verbunden werden,
- die den Maschinen (112a) zugeordneten Signalgeber als Strom-Zwischenstecker (10) in der Stromanschlussleitung der Maschine angeordnet werden,

13. Verfahren nach Anspruch 12,
**dadurch gekennzeichnet, dass**
- die Signalgeber mit dem Signalempfängern und/oder die Steuerungsmodule als Signalempfänger untereinander mittels Funkstrecken oder mittels Infraroteinheiten oder mittels gesteckten Kabeln miteinander verbunden werden, und/oder
- die der Entstaubungsanlage zugeordneten Signalempfänger, insbesondere Steuerungsmodule (1a, 2a), an den Stromfluss unterbrechende oder freigebende Stromzwischenstecker (10') über Funk oder steckbare Kabel angeschlossen werden.

## Claims

1. A modular control kit for a dust extractor control (20), comprising
- a filter control module (1a, b ...);
- a fan control module (2a, b ...), wherein one of the modules acts as a master module; and
- at least one signal transmitter and at least one signal receiver,
- wherein the modules (1a..., 2a...) are respectively arranged in a separate control housing (12),
- wherein each control housing (12) includes at least one connection socket (4) for a combined signal- and power transmission,
- wherein at least the master module also includes a radio unit (3),
- wherein the kit includes accordingly configured combination cables (5) for simultaneous signal- and power transmission,
- wherein the kit also includes a slide control module (16) and a residual dust control module (17),
- wherein the signal transmitters and the signal receivers of the dust extraction control (20), in particular also the control modules (1a, 2a, 16, 17...) are connectable with one another either wirelessly in particular through radio signals or through plugged in cables which are either special cables for the sockets (4), in particular combination cables (5) or the cables of an existing power grid; and
- wherein signal generators associated with machines (112a) are configured to be arranged as intermediary power plugs (10) in the power supply conductor of the machine.

2. The kit according to claim 1,
- wherein the functional unit (3) includes at least one radio receiver (3a) in particular also a radio transmitter (3b) and preferably also a radio amplifier (3c), and/or,
- wherein the kit includes a spark arrestor module (18) and/or,
- wherein one of the combination cables is a back coupling cable (6) to connect the two connection sockets of the fan control (2a, b...) with one another, in particular directly with one another.

3. The kit according to one of the preceding claims,
- wherein the connection socket (4) are either signal transmitter connection sockets (4a) for connecting signal encoders, in particular current sensors, switches of blocking slides, pressure sensors, temperature sensors and also of signal receivers, in particular rattling motors, horns, locking slide drives and in particular permit a combined signal-/ power transmission, or
- wherein the connection sockets (4) are bus connection sockets (4b) for connecting additional control modules or for connecting a PC, a display, a SPS control and in particular a pure data connection or a format converter into other data formats, thus without power transmission, and/or
- wherein the connection sockets (4) include recesses (7) which can be closed by inserts (8) and the associated connection plugs of the cables, in particular combination cables (5) include lugs (9) which fit into the recesses and the lugs (9) are removable, in particular through breaking them off.

4. The kit according to one of the preceding claims,
- wherein the master module, in particular the filter control module (1 a) includes two separate radio receivers (3a1, 3a2), in particular also two separate radio transmitters (3b1, 3b2), wherein one of them only processes signals for blocking slides, the other one processes all other signals on another frequency.

5. The kit according to one of the preceding claims,
- wherein the kit includes fan control modules (2a...) in plural power ranges, and/or
- wherein the kit includes transformer coils (14) as current sensors which in particular automatically process the measured current flow and automatically store the threshold value determined therefrom which indicates current flow and put out a signal as a function thereof, and/or
- wherein the kit includes intermediary power plugs (10) which include a current flow sensor and a connection socket for the combination cables (5) for tapping the current flow signal, and/or
- wherein at least one of the control modules (1a, b..., 2a, 2b...), in particular the functional unit (3) included therein and/or the intermediary power plug (10) includes a modulation module to transmit signals through modulating them onto the existing power grid.

6. The kit according to one of the preceding claims,
- wherein the fan control module (2) includes a counter, in particular a software based counter for totaling the running machines and/or open locking slides, in particular the cross sections of the open locking slides and/or
- at least one fan control module (2) and/or at least one of the signal transmitters include a switch for manually starting the extraction fan (106a...), and/or
- wherein the fan control module (2a, b) includes a switch off delay which causes the extraction fan (106a...) to switch off with a time delay after switching off the last connected machine (112a ...), and/or
- wherein the residual dust sensor (11) includes in particular also all control modules, a radio unit (3), in particular the same radio unit (3) as the filter control module (1a, b).

7. The kit according to one of the preceding claims,
- wherein the fan control module (2a, b) and/or the filter control module (1 a)
- either includes a transformer (13) for adapting the delivered voltage to the voltage required by the control module (1a, b, 2a, b) and/or
- includes a particular power source, in particular a power generator (14) which is driven by temperature, pressure or air flow, in particular compressed air, and
- wherein the power processing or power generation is arranged in particular in the cover (12a) of the control housing (12) and in particular the kit includes various covers with these different or common contents.

8. The kit according to one of the preceding claims,
- wherein the control modules, in particular the fan control module (2a) includes a control housing (12) which fits onto the control housing (12) of the master module, in particular of the filter control module (1 a) and can be bolted together therewith and/or,
- the kit includes a fan control module (2a) which also includes at least one frequency converter and connection sockets (4),
- for a potentiometer through which the frequency at the frequency converter is manually adjustable or,
- for a differential pressure meter so that the frequency converter switches the frequency of the fan motor as a function of the measurement values of the differential pressure meter in front and behind the filter.

9. The kit according to one of the preceding claims,
- wherein the signal transmitter includes a signal for a flow velocity of air in the feed channel of the machine (112a, b..) in addition to the signal for the current flow in the power supply of the machine (112a, b...), and/or
- the signal transmitter includes in particular an optical operation indicator and/or a fault indicator with respect to the signal transmitter, in particular configured as light emitting diodes (53), and/or
- the signal transmitter associated with the machine includes a warning indicator (56) for excessive residual dust content of the return air, and/or
- wherein blocking slides (122a, b) are arranged in the feed channels (102 a, b) and the drive of each locking slide (122a, b) is connected with the respective signal transmitter and controlled by the signal transmitter, in particular parallel and time synchronized with starting the extraction fan (1 06a, b).

10. The kit according to one of the preceding claims,
- wherein locking slides (22a, b) are arranged in the feed channels (2a, b) wherein drives of the locking slides are provided with power simultaneously with drive of the respective machine and are opened with switching the machine on, and/or
- the signal transmitters are provided in different current ranges according to the supply power of the machine to be connected or are switchable between these ranges and/or
- the signal transmitters include a connection, in particular a plug in connection for a signal conductor to the locking slide (122a...) in order to control the locking slide to open or close.

11. The kit according to one of the preceding claims,
- wherein the master module, in particular the filter control module (1 a) includes a recording unit for recording current power values for all motors of the dust extraction arrangement and also for all machines (112a...) connected to the dust extraction arrangement and indicates their energy consumption totaled up over time and/or archives it and/or automatically computes in particular also means and peak values of energy consumption automatically and/or
- wherein the signal transmitter includes an input unit (54) for inputting the cross sections of the particular feed channels (102a...) and the cross section of the at least one associated main channel (101 a...).

12. A method for connecting an extractor arrangement control (20) including elements of the modular kit according to one of the preceding claims to a dust extractor arrangement, comprising:
- at least one extraction fan (106a..) with a fan control module (2a, b)
- at least one main extraction channel (101a...) including plural supply channels (102a...) leading into the main extraction channel and having at least one extraction connection;
- at least one machine (112a...) through which contaminated air is to be extracted and dust is to be removed from the air;
- at least one dust filter (103) with a filter control module (1a, b...)
- at least one return air opening, in particular a return air channel (105),
- wherein the signal transmitters associated with the particular machines (112a...) to be extracted and also the control modules (1a..., 2a...) associated with the dust extractor as signal receivers are connected with one another and also with the respective machine (112a) on the one hand side and with the dust extractor on the other hand side via radio or through pluggable cables, and
- wherein the signal transmitters associated with the machines (112a) are arranged as intermediary power plugs (10) in the power connection conductor of the machine.

13. The method for according to claim 12,
- wherein the signal transmitters are connected with the signal receivers and/or the control modules as signal receivers are connected with one another through radio links or through infra red units or through plugged cables, and/or
- wherein the signal receivers associated with the dust extraction arrangement in particular the control modules (1 a, 2a) are connected via radio or through pluggable cables with intermediary power plugs (10') interrupting or connecting the current flow.

## Revendications

1. Structure modulaire pour une commande d'une installation de dépoussiérage (20) comprenant
- un module de commande de filtre (1 a, b...), et
- un module de commande de ventilateur (2a, b...), dont l'un fait office de module maître,
- au moins un indicateur de signaux, et au moins un récepteur de signaux,
- les modules (1a..., 2a...) étant respectivement disposés dans un boîtier de commande séparé (12),
- chaque boîtier de commande (12) présentant au moins une douille de connexion (4) pour une transmission combinée de signal et de courant,
- au moins également une unité radio () étant également logée dans le module maître, **caractérisée en ce que**
- la structure modulaire comprend les câbles combinés correspondants (5) pour une transmission simultanée du courant et des signaux,
**en ce que** la structure modulaire comprend également un module de commande de registre (16) et un module de commande de poussière résiduelle (17),
- les émetteurs de signaux et les récepteurs de signaux de la commande (20) de l'installation de dépoussiérage, en particulier également les modules de commande (1 a, 2a, 16, 17...) sont reliables entre eux soit sans fil en particulier au moyen de signaux radios soit au moyen de câbles branchés qui sont soit des câbles spéciaux pour les douilles (4), en particulier les câbles combinés (5) ou les câbles d'un réseau déjà existant, et
- des émetteurs de signaux associés à des machines (112a) sont agencés pour être disposés comme connecteur intermédiaire de courant (10) dans la ligne électrique de courant de la machine.

2. Structure modulaire selon la revendication 1,
**caractérisée en ce que**
- l'unité radio (3) comprend au moins un récepteur radio (3a), en particulier également un émetteur radio (3b) et de préférence également un amplificateur radio (3c), et/ou
- la structure modulaire comprend un module de commande d'extinction radio (18), et/ou
- l'un des câbles combinés est un câble de rétroaction (6) pour relier les deux douilles de connexion de la commande de ventilateur (2a, b...), en particulier directement entre eux.

3. Structure modulaire selon l'une des revendications précédentes, **caractérisée en ce que**
les douilles de connexion (4)
- sont des douilles de connexion émettrices (4a) pour le raccordement d'émetteurs de signaux, en particulier de capteurs de courant électrique, d'interrupteurs de vannes d'arrêt, de capteurs de pression, de sondes de température, ainsi que des récepteurs de signaux, en particulier de moteurs vibratoires, d'avertisseurs sonores, d'entraînement de vannes d'arrêt et permettent en particulier une transmission combinée de signaux et de courant,
- ou des douilles de connexion de bus (4b) pour le raccordement d'autres modules de commande et pour le raccordement d'un PC, d'un écran, d'une commande SPS et en particulier une connexion pure de données ou un convertisseur de formats dans d'autres formats de données, donc sans transmission de courant et/ou
- les douilles de connexion (4) présentent des évidements (7) qui peuvent être fermés par des pièces adaptatrices (8), et les connecteurs appropriés des câbles, en particulier des câbles combinés (5) présentent des ergots (9) qui s'engagent dans les évidements et les ergots (9) peuvent être retirés en particulier être cassés.

4. Structure modulaire selon l'une des revendications précédentes, **caractérisée en ce que**
- le module maître en particulier le module de commande de filtre (1 a) présente deux récepteurs radio séparés (3a1, 3a2), présente en particulier deux émetteurs radio séparés (3b1, 3b2), dont l'un ne traite que les signaux de vannes d'arrêt et l'autre traite tous les autres signaux sur une autre fréquence.

5. Structure modulaire selon l'une des revendications précédentes, **caractérisée en ce que**
- la structure modulaire comprend des modules de commande de ventilateur (2a...) sur plusieurs degrés de puissance, et/ou
- la structure modulaire comporte des bobines de convertisseurs (14) en tant que capteurs de courant électrique, qui analysent en particulier le flux de courant mesuré et mémorisent automatiquement la valeur seuil déterminée si un courant est détecté et émettent un signal correspondant, et/ou
- la structure modulaire comprend des connecteurs de courant intermédiaires (10) qui comprennent un capteur de courant ainsi qu'une douille de connexion pour les câbles combinés (5) pour capter le signal de courant électrique, et/ou
- au moins l'un des modules de commande (1 a, b.., 2a, b...), en particulier l'unité de radio intégrée (3) et/ou le connecteur intermédiaire de courant (10) présente un module de modulation pour transmettre des signaux par modulation sur le réseau électrique existant.

6. Structure modulaire selon l'une des revendications précédentes, **caractérisée en ce que**
- le module de commande de ventilateur (2) présente un compteur, en particulier un compteur logiciel pour comptabiliser les machines en fonction et/ou les vannes d'arrêt ouvertes, en particulier des sections transversales des vannes de blocage ouvertes, et/ou
- au moins un module de commande de ventilateur (2) et/ou au moins l'un des émetteurs de signaux présente un interrupteur pour la mise en route manuelle du ventilateur d'aspiration (1 06a..) et/ou
- le module de commande de ventilateur (2a, b) présente une temporisation de coupure qui permet de couper en différé ultérieurement le ventilateur d'aspiration (106a) lors de la coupure de la dernière machine raccordée (112a...), et/ou
- le capteur de poussière résiduelle (11), en particulier également tous les modules de commande comportent une unité radio (3) en particulier la même unité radio (3) que le module de commande de filtre (1a, b).

7. Structure modulaire selon l'une des revendications précédentes, **caractérisée en ce que**
le module de commande de ventilateur (2a, b) et/ou le module de commande de filtre (1 a)
- comprend un transformateur (13) pour adapter la tension fournie à la tension nécessaire pour le module de tension (1 a, b, 2a, b) et/ou
- une propre source de courant, en particulier un générateur de courant (14) qui est entraîné par la température, la pression ou le courant d'air, en particulier de l'air comprimé, et
- la préparation de courant ou la génération de courant est disposée en particulier dans le couvercle (12a) du boîtier de commande (12) et en particulier la structure modulaire présente différents couvercles avec ces contenus différents ou communs.

8. Structure modulaire selon l'une des revendications précédentes, **caractérisée en ce que**
- les modules de commande, en particulier le module de commande de ventilateur (2a) présentent un boîtier de commande (12), lequel s'adapte sur le boitier de commande (12) du module maître, en particulier du module de commande de filtre (1 a) et peut être vissé à ce dernier, et/ou
- la structure modulaire comprend un module de commande de ventilateur (2a) qui comporte également au moins un convertisseur de fréquences ainsi que des douilles de connexion (4)
- pour un potentiomètre avec lequel la fréquence est réglable manuellement sur le convertisseur de fréquences ou
- pour un manomètre différentiel de sorte que le convertisseur de fréquences commute la fréquence du moteur de ventilateur en fonction des valeurs de mesure du manomètre différentiel devant et derrière le filtre.

9. Structure modulaire selon l'une des revendications précédentes, **caractérisée en ce que**
- les émetteurs de signaux émettent outre le signal pour le flux de courant dans l'alimentation de courant de la machine (112a, b..) un signal pour la vitesse d'écoulement de l'air dans le canal d'alimentation de la machine,
- l'émetteur de signaux présente un affichage de service en particulier optique et/ un affichage de panne concernant l'émetteur de signaux, en particulier sous forme de diodes lumineuses (53), et/ou
- l'émetteur de signaux associé à la machine présente un affichage d'avertissement (56) pour la teneur trop élevée en poussière résiduelle de l'air de retour, et/ou
- dans les canaux d'alimentation (102a, b), sont disposées des vannes d'arrêt (122a, b), et l'entraînement de chaque vanne d'arrêt (122a, b) est relié à l'émetteur de signaux respectif et est commandé par ce dernier, en particulier parallèlement et simultanément pour la mise en marche du ventilateur d'aspiration (106a, b).

10. Structure modulaire selon l'une des revendications précédentes, **caractérisée en ce que**
- dans les canaux d'alimentation (2a, b), sont disposées des vannes d'arrêt (22a, b) dont les entraînements sont alimentés en courant simultanément avec l'entraînement de la machine respective et sont ouvertes avec la mise en route de la machine, et/ou
- les émetteurs de signaux se trouvent dans différentes plages d'intensité de courant en fonction de la puissance d'alimentation de la machine à raccorder ou peuvent commuter entre ces plages, et/ou
- les émetteurs de signaux présentent une connexion, en particulier un connecteur femelle pour une ligne de signaux reliée à la vanne d'arrêt (122a) pour commander son ouverture ou sa fermeture.

11. Structure modulaire selon l'une des revendications précédentes, **caractérisée en ce que**
- le module maître, en particulier, le module de commande de filtre (1 a) comprend une unité pour l'enregistrement des valeurs actuelles de puissance de tous les moteurs de l'installation de dépoussiérage et des machines (112a) raccordées à l'installation de dépoussiérage, et dont la consommation d'énergie est affichée, totalisée dans le temps et/ou archivée, et en particulier, des valeurs moyennes et des valeurs de pointe de la consommation d'énergie sont également automatiquement calculées et/ou additionnées et/ou
- l'émetteur de signaux comprend une unité de saisie (54) pour saisir les sections transversales de chacun des canaux d'alimentation (102a...) ainsi que de la section transversale d'au moins un canal principal associé (101 a...).

12. Procédé pour le raccordement d'une commande d'installation d'aspiration (20), se composant des éléments de la structure modulaire selon l'une des revendications précédentes sur une installation de dépoussiérage présentant
- au moins un ventilateur d'aspiration (1 06a) avec un module de commande de ventilateur (2a, b..),
- au moins un canal principal d'aspiration (101 a) avec plusieurs canaux d'alimentation (102a...) y débouchant avec au moins un raccordement d'aspiration,
- au moins une machine (112a...) devant aspirer et dépoussiérer l'air contaminé,
- au moins un filtre à poussière (103), avec un module de commande de filtre (1 a, b..),
- au moins une ouverture d'air de retour, en particulier un canal d'air de retour (105), **caractérisé en ce que**
- les émetteurs de signaux associés à chacune des machines à aspirer (112a..) et les modules de commande (1a..., 2a..) associés à l'installation de dépoussiérage en tant que récepteur de signaux sont reliés entre eux et également avec la machine respective (112a) d'une part ainsi qu'à l'installation de dépoussiérage et d'autre part par radio ou au moyen d'un câble enfichable,
les émetteurs de signaux associés aux machines (112a) étant disposés dans la ligne de connexion électrique de la machine et servent de connecteurs électriques mâles intermédiaires (10).

13. Procédé selon la revendication 12,
**caractérisé en ce que**
- les émetteurs de signaux sont reliés aux récepteurs de signaux et/ou les modules de commandes sont reliés entre eux par des trajets radioélectriques ou au moyen d'unités infrarouges ou par des câbles branchés et/ou,
- les récepteurs de signaux associés à l'installation de dépoussiérage, en particulier les modules de commande (1 a, 2a) sont raccordés à des connecteurs males intermédiaires (10') de courant coupant ou libérant le courant par radio ou par connexion câblée.
